# EUROPEAN PATENT SPECIFICATION

(11) **EP 4 397 561 B1**
(45) Date of publication and mention of the grant of the patent: **19.08.2026**
(21) Application number: 21958719.3
(22) Date of filing: 29.09.2021
(51) Int. Cl.: B60W 50/02, B60W 60/00

(54) **VEHICLE CONTROL METHOD AND COMPUTING DEVICE**
FAHRZEUGSTEUERUNGSVERFAHREN UND COMPUTERVORRICHTUNG
PROCÉDÉ DE COMMANDE DE VÉHICULE ET DISPOSITIF INFORMATIQUE

(43) Date of publication of application: 10.07.2024
(73) Proprietor: Yinwang Intelligent Technologies Co., Ltd., Shenzhen, Guangdong 518129 (CN)
(72) Inventor: SHE, Xiaoli, Shenzhen, Guangdong 518129 (CN); FANG, Yeyang, Shenzhen, Guangdong 518129 (CN); LI, Shuaijun, Shenzhen, Guangdong 518129 (CN)
(74) Representative: Gill Jennings & Every LLP
(86) International application number: PCT/CN2021/121638
(87) International publication number: WO 2023/050129

(56) References cited:
- CN-A- 109 910 910
- CN-A- 110 386 148
- CN-A- 112 572 465
- US-A1- 2018 297 609
- US-A1- 2019 382 031

## Description

### TECHNICAL FIELD

The invention relates to the field of intelligent vehicles, and more specifically, to a vehicle control method and computing device.

### BACKGROUND

With development of technologies, intelligent terminals such as intelligent transportation devices and intelligent vehicles are gradually entering daily life of people. Sensors play an important role in intelligent terminals. Various sensors, such as a millimeter-wave radar, a lidar, a camera, and an ultrasonic radar, installed on an intelligent terminal sense an ambient environment in a moving process of the intelligent terminal, collect data for the intelligent terminal to perform environment recognition, for example, recognition and tracking of a moving object and recognition of a static scenario such as a lane line and a sign, and perform path planning based on a navigator and map data. The sensors can detect a potential danger in advance, and assist in taking or even autonomously take a necessary avoidance measure, thereby effectively improving safety and comfort of the intelligent terminal.

Intelligent driving is a mainstream application in the field of artificial intelligence. In a running process of a self-driving vehicle, a sensor failure may occur, including a loose wire bundle caused by vehicle vibration, surface damage of a sensor, and blocking by dirt. The damaged sensor greatly affects performance of a sensing system, thereby affecting an intelligent driving capability.

Currently, most intelligent driving systems directly exit an autonomous driving mode after a sensor fails, that is, exit all autonomous driving functions. In this way, although driving safety can be strictly ensured, availability of the intelligent driving systems and experience of intelligent driving are reduced. Other previously proposed arrangements are disclosed in US 2018/297609 A1.

### SUMMARY

The invention provides a vehicle control method and computing device, to improve an intelligence degree of autonomous driving on the premise of ensuring driving safety.

According to a first aspect, a vehicle control method according to claim 1 is provided, including: obtaining sensor status information and autonomous driving function information, where the sensor status information includes information indicating that one or more sensors are in a failed state, the autonomous driving function information is used to indicate a currently running autonomous driving function, the autonomous driving function includes a plurality of running conditions, and the autonomous driving function comprises an automated valet parking, AVP, function, an auto parking assist, APA, function, or a remote parking assist, RPA, function, wherein: the AVP function is configured to control a vehicle to cruise through and sense an ambient environment to determine whether there is an empty parking space, the APA function is configured to determine, after it is determined that there is an empty parking space, a location relationship between the empty parking space and the vehicle, and control the vehicle to park into the empty parking space, and the RPA function is configured to receive a parking instruction from a terminal device, determine, after it is determined that there is an empty parking space, a location relationship between the empty parking space and the vehicle, and control the vehicle to park into the empty parking space; and based on impact of a failure of the one or more sensors on a first running condition, determining a driving policy corresponding to the failure of the one or more sensors in the first running condition, where the first running condition is any one of the plurality of running conditions. The driving policy is a driving policy for multi-level function degradation, and include: maintaining the current autonomous driving function, disabling a part of the autonomous driving function, and exiting the autonomous driving function. Implementation of the first running condition is related to one or more sub-functions, and the one or more sub-functions include at least one of the following: one or more key sub-functions, one or more non-key sub-functions, and one or more auxiliary sub-functions; and the first running condition is any one of the plurality of running conditions, a loss of the key sub-function causes inability to implement the first running condition, a loss of the non-key sub-function does not affect implementation of a sub-function other than the non-key sub-function in the first running condition, and a loss of the auxiliary sub-function does not affect the implementation of the first running condition. The determining a driving policy corresponding to the failure of the one or more sensors in the first running condition includes: determining that a driving policy corresponding to a failure of a third type of sensor in the first running condition is exiting the autonomous driving function, where the one or more sensors include the third type of sensor, and the failure of the third type of sensor affects implementation of a key sub-function in the first running condition. The AVP function is exited when the third type of sensor comprises at least one of: two or more front-facing cameras in an event where there is no other front-facing camera that has not failed and that are configurable to perform the sub-functions of the failed two or more front-facing cameras, a lateral camera, a front-facing LiDAR, a lateral LiDAR, and a fisheye camera. The APA or RPA function is exited when the third type of sensor comprises the fisheye camera, the front-facing LiDAR and/or the lateral LiDAR, and an ultrasonic radar.

The running conditions refer to various working statuses or conditions of the autonomous driving function, for example, cruising, vehicle following, lane keeping, lane changing, turning, starting/stopping, reverse parking, and parallel parking. More specifically, for example, the running condition may be a cruising condition of ICA, a vehicle following condition of AVP, or a reverse parking condition of APA. An intelligent driving vehicle generally presents or provides an autonomous driving function (for example, in a form of a function package of the autonomous driving function) for a vehicle user based on different running conditions. That is, when a driver enables the autonomous driving function, one or more function packages of the autonomous driving function are generally enabled, and are respectively corresponding to different running conditions. The driver may enable or disable a corresponding running condition based on a preference or a requirement of the driver. For example, when the driver wants to enable a vehicle following function and a lane keeping function, the driver may send a corresponding autonomous driving instruction to the vehicle in a manner such as a lever or a button. For another example, when the driver only wants to enable the vehicle following function but does not want to enable the lane keeping function, the driver may send a corresponding autonomous driving instruction to the vehicle in another manner such as a lever or a button.

In the vehicle control solution provided in this embodiment of the invention, different levels of driving policies are formulated based on different degrees of dependence of different sensors on each running condition, instead of simply exiting all autonomous driving functions directly. In this way, in an autonomous driving process, when one or more sensors fail, the vehicle maintains all or some current autonomous driving functions as much as possible, so that autonomous driving experience of the user can be improved when driving safety is ensured.

On the other hand, in the vehicle control solution in this embodiment of the invention, control can be performed at a granularity of a vehicle running condition. Compared with a manner in which control can only be performed at a granularity of an entire autonomous driving function, the vehicle control solution can more flexibly provide an autonomous driving capability with more abundant levels and more refined levels, thereby improving autonomous driving experience of the user.

In the vehicle control solution provided in this embodiment of the invention, at least three levels of driving policies are formulated based on different degrees of dependence of different sensors on a vehicle running condition, instead of simply maintaining the autonomous driving function or directly exiting the autonomous driving function. In this way, an autonomous driving capability with more abundant levels and more refined levels can be more flexibly provided, to ensure reasonableness of function degradation.

Implementation of each running condition is related to one or more sub-functions. Generally, the sub-functions are not presented to the vehicle user, that is, the driver cannot select a specific sub-function in the running condition. For example, implementation of a turning condition may rely on a non-key sub-function of recognizing a left target, a non-key sub-function of recognizing a right target, a non-key sub-function of recognizing a rear target, an auxiliary sub-function of target recognition, and the like. For another example, implementation of an oblique parking condition may rely on a key sub-function of recognizing a nearby obstacle, a non-key sub-function of high-precision recognition, the auxiliary sub-function of target recognition, and the like.

With reference to the first aspect, in some implementations of the first aspect, the determining a driving policy corresponding to the failure of the one or more sensors in the first running condition includes: determining that a driving policy corresponding to a failure of a first type of sensor in the first running condition is maintaining the autonomous driving function, where the one or more sensors include the first type of sensor, and the failure of the first type of sensor does not affect the implementation of the first running condition.

With reference to the first aspect, in some implementations of the first aspect, the determining a driving policy corresponding to the failure of the one or more sensors in the first running condition includes: determining that a driving policy corresponding to a failure of a second type of sensor in the first running condition is disabling a part of the autonomous driving function, where the one or more sensors include the second type of sensor, and the failure of the second type of sensor affects implementation of a non-key sub-function in the first running condition.

In the vehicle control solution provided in this embodiment of the invention, when some sensors fail and consequently the first running condition cannot run normally, the vehicle may disable some autonomous driving functions associated with the failed sensors, when maintaining the current autonomous driving function. In this way, some or all autonomous driving functions may not need to be manually taken over, so that autonomous driving experience of the user is improved when driving safety is ensured.

With reference to the first aspect, in some implementations of the first aspect, the first type of sensor includes a first sensor unit, the first sensor unit is associated with a first sub-function, there is another sensor unit that is not failed and that is associated with the first sub-function, and the first sub-function is any one of the one or more sub-functions.

In the vehicle control solution provided in this embodiment of the invention, in a running condition, when sensing information of some failed sensors may be compensated for by using another sensor that is not failed, the vehicle can still maintain the current autonomous driving function. In this way, driving policies with more abundant levels can be more flexibly provided, thereby improving autonomous driving experience of the user.

With reference to the first aspect, in some implementations of the first aspect, the first type of sensor further includes a second sensor unit, the second sensor unit is associated with a second auxiliary sub-function, and the second auxiliary sub-function is any one of the one or more auxiliary sub-functions.

With reference to the first aspect, in some implementations of the first aspect, the second type of sensor includes a third sensor unit, the third sensor unit is associated with a third non-key sub-function, there is no other failed sensor unit associated with the third non-key sub-function, and the third non-key sub-function is any one of the one or more non-key sub-functions.

With reference to the first aspect, in some implementations of the first aspect, the second type of sensor further includes a fourth sensor unit, the fourth sensor unit is associated with a fourth key sub-function and a fourth non-key sub-function, there is an ambient environment that compensates for the fourth key sub-function and another sensor unit that is not failed and that senses the ambient environment, the ambient environment includes a vehicle, a railing, and the like, the fourth key sub-function is any one of the one or more key sub-functions, and the fourth non-key sub-function is any one of the one or more non-key sub-functions.

In the vehicle control solution provided in this embodiment of the invention, when some sensor units associated with a key sub-function fail, key sensing information of a failed sensor may be compensated for by using an ambient environment and another sensor unit. In this way, even if a sensor associated with a key sub-function fails, the vehicle can still skip exiting the autonomous driving function, so that autonomous driving experience of the user can be improved.

With reference to the first aspect, in some implementations of the first aspect, the third type of sensor includes a fifth sensor unit, the fifth sensor unit is associated with a fifth key sub-function, and there is no other sensor unit that is not failed and that is associated with the fifth key sub-function, or there is no at least one of the following: an ambient environment that compensates for the fifth key sub-function, and another sensor unit that is not failed and that senses the ambient environment; and the fifth key sub-function is any one of the one or more key sub-functions.

According to a second aspect, a computing device according to claim 7 is provided, including a memory and a processor. The memory is configured to store program instructions, and when the program instructions are executed in the processor, the processor is configured to perform the method according to the first aspect.

The processor in the second aspect may include a central processing unit (central processing unit, CPU), or may include a combination of a CPU and a neural network computing processor.

According to a third aspect, a computer-readable medium according to claim 8 is provided. The computer-readable medium stores program code to be executed by a device, and the program code is used to perform the method in the first aspect.

According to a fourth aspect, a self-driving vehicle according to claim 9 is provided, including a plurality of front-facing cameras, a lateral camera, a LiDAR, a fisheye camera, an ultrasonic radar, and the computing device of the second aspect.

It should be understood that, in the invention, the method in the first aspect may specifically refer to the method in any one of the first aspect or the implementations of the first aspect.

### BRIEF DESCRIPTION OF DRAWINGS

FIG. 1 is a functional block diagram of a vehicle to which an embodiment of the invention is applicable;
FIG. 2 is a schematic diagram of a structure of a vehicle sensor according to an embodiment of the invention;
FIG. 3 is a schematic diagram of an architecture of a simplified vehicle control system to which an embodiment of the invention is applicable;
FIG. 4 is a schematic flowchart of a vehicle control method according to an embodiment of the invention;
FIG. 5 is a schematic diagram of HMI interaction in a vehicle control method according to an embodiment of the invention;
FIG. 6 is a schematic flowchart of a vehicle control method according to an embodiment of the invention;
FIG. 7 is a schematic block diagram of a vehicle control apparatus according to an embodiment of the invention; and
FIG. 8 is a schematic block diagram of a vehicle control apparatus according to an embodiment of the invention.

### DESCRIPTION OF EMBODIMENTS

The following describes technical solutions of the invention with reference to accompanying drawings.

A vehicle control method and apparatus provided in embodiments of the invention may be applied to an intelligent driving vehicle, or may be applied to intelligent terminals such as a smart home device and a robot. The following describes the technical solutions in embodiments of the invention with reference to the accompanying drawings.

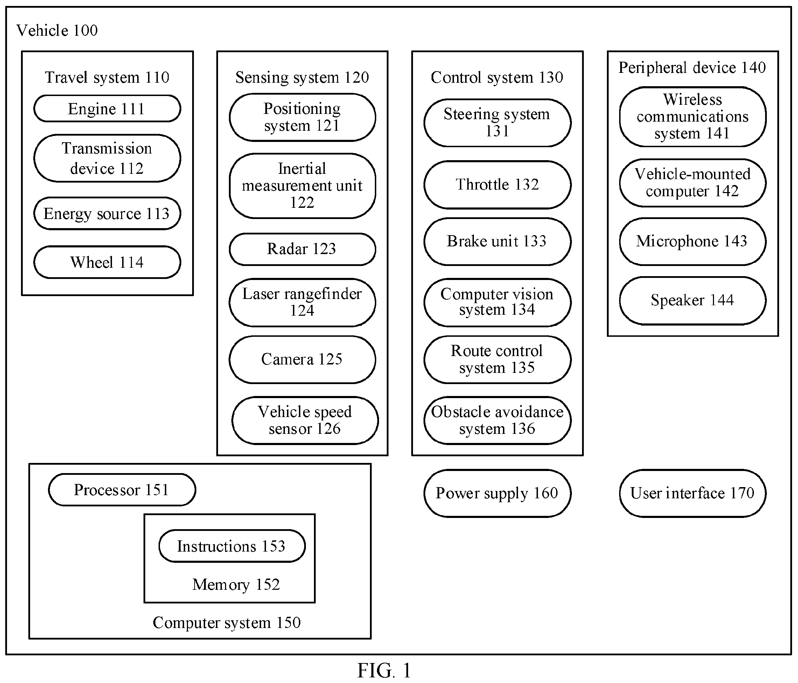

FIG. 1 is a functional block diagram of a vehicle 100 to which an embodiment of the invention is applicable. The vehicle 100 may be an intelligent driving vehicle, and the vehicle 100 may completely or partially support an autonomous driving mode.

The vehicle 100 may include various subsystems, such as a travel system 110, a sensing system 120, a control system 130, one or more peripheral devices 140, a power supply 160, a computer system 150, and a user interface 170.

Optionally, the vehicle 100 may include more or fewer subsystems, and each subsystem may include a plurality of elements. In addition, each subsystem and component of the vehicle 100 may be interconnected in a wired or wireless manner.

For example, the travel system 110 may include a component for providing power motion for the vehicle 100. In an embodiment, the travel system 110 may include an engine 111, a transmission device 112, an energy source 113, and a wheel/tire 114. The engine 111 may be an internal combustion engine, a motor, an air compression engine, or a combination of other types of engines, for example, a hybrid engine including a gasoline engine and a motor, or a hybrid engine including an internal combustion engine and an air compression engine. The engine 111 may convert the energy source 113 into mechanical energy.

For example, the energy source 113 may include gasoline, diesel, another oil-based fuel, propane, another compressed-gas-based fuel, ethanol, a solar panel, a battery, and another power source. The energy source 113 may also provide energy for another system of the vehicle 100.

For example, the transmission device 112 may include a gearbox, a differential, and a drive shaft, where the transmission device 112 may transmit mechanical power from the engine 111 to the wheel 114.

In an embodiment, the transmission device 112 may further include another component, for example, a clutch. The drive shaft may include one or more shafts that may be coupled to one or more wheels 114.

For example, the sensing system 120 may include several sensors that sense information about an ambient environment of the vehicle 100.

For example, the sensing system 120 may include a positioning system 121 (for example, a global positioning system (global positioning system, GPS), a BeiDou system, or another positioning system), an inertia measurement unit (inertial measurement unit, IMU) 122, a radar 123, a laser rangefinder 124, a camera 125, and a vehicle speed sensor 126. The sensing system 120 may further include sensors (for example, an in-vehicle air quality monitor, a fuel gauge, and an oil temperature gauge) of an internal system of the monitored vehicle 100. Sensor data from one or more of these sensors may be used to detect an object and corresponding features (a location, a shape, a direction, a speed, and the like) of the object. Such detection and recognition are key functions of a safe operation of the autonomous vehicle 100.

The positioning system 121 may be configured to estimate a geographical location of the vehicle 100. The IMU 122 may be configured to sense location and orientation changes of the vehicle 100 based on inertial acceleration. In an embodiment, the IMU 122 may be a combination of an accelerometer and a gyroscope.

For example, the radar 123 may sense an object in the ambient environment of the vehicle 100 by using radio information. In some embodiments, in addition to sensing the object, the radar 123 may be further configured to sense a speed and/or an advancing direction of the object.

For example, the laser rangefinder 124 may use laser light to sense an object in an environment in which the vehicle 100 is located. In some embodiments, the laser rangefinder 124 may include one or more laser sources, a laser scanner, one or more detectors, and another system component.

For example, the camera 125 may be configured to capture a plurality of images of the ambient environment of the vehicle 100. For example, the camera 125 may be a static camera or a video camera.

For example, the vehicle speed sensor 126 may be configured to measure a speed of the vehicle 100. For example, real-time speed measurement may be performed on the vehicle. A measured vehicle speed may be transmitted to the control system 130 to implement control of the vehicle.

As shown in FIG. 1, the control system 130 controls operations of the vehicle 100 and components of the vehicle 100. The control system 130 may include various elements, such as a steering system 131, a throttle 132, a brake unit 133, a computer vision system 134, a route control system 135, and an obstacle avoidance system 136.

For example, the steering system 131 may be operated to adjust an advancing direction of the vehicle 100. For example, in an embodiment, the steering system may be a steering wheel system. The throttle 132 may be configured to control an operation speed of the engine 111 and then control the speed of the vehicle 100.

For example, the brake unit 133 may be configured to control the vehicle 100 to decelerate, and the brake unit 133 may use friction force to retard the wheel 114. In another embodiment, the brake unit 133 may convert kinetic energy of the wheel 114 into a current. The brake unit 133 may alternatively slow down a rotational speed of the wheel 114 in another manner to control the speed of the vehicle 100.

As shown in FIG. 1, the computer vision system 134 may be operated to process and analyze an image captured by the camera 125, to recognize an object and/or a feature in the ambient environment of the vehicle 100. The object and/or the feature may include traffic information, a road boundary, and an obstacle. The computer vision system 134 may use an object recognition algorithm, a structure from motion (structure from motion, SFM) algorithm, video tracking, and another computer vision technology. In some embodiments, the computer vision system 134 may be configured to: draw a map for an environment, track an object, estimate a speed of the object, and the like.

For example, the route control system 135 may be configured to determine a driving route of the vehicle 100. In some embodiments, the route control system 135 may determine a driving route for the vehicle 100 with reference to data from the sensors, the GPS, and one or more predetermined maps.

As shown in FIG. 1, the obstacle avoidance system 136 may be configured to recognize, evaluate, and avoid or use another manner to cross a potential obstacle in the environment of the vehicle 100.

In an instance, the control system 130 may additionally or alternatively include components other than those shown and described. Alternatively, some of the components shown above may be deleted from the control system 130.

As shown in FIG. 1, the vehicle 100 may interact with an external sensor, another vehicle, another computer system, or a user by using the peripheral device 140. The peripheral device 140 may include a wireless communications system 141, a vehicle-mounted computer 142, a microphone 143, and/or a speaker 144.

In some embodiments, the peripheral device 140 may provide a means for the vehicle 100 to interact with the user interface 170. For example, the vehicle-mounted computer 142 may provide information for the user of the vehicle 100. The user interface 116 may also be configured to operate the vehicle-mounted computer 142 to receive a user input, and the vehicle-mounted computer 142 may be operated through a touchscreen. In another case, the peripheral device 140 may provide a means for the vehicle 100 to communicate with another device in the vehicle. For example, the microphone 143 may receive audio (for example, a voice command or another audio input) from the user of the vehicle 100. Likewise, the speaker 144 may output audio to the user of the vehicle 100.

As illustrated in FIG. 1, the wireless communications system 141 may wirelessly communicate with one or more devices directly or through a communications network. For example, the wireless communications system 141 may use 3G cellular communication such as code division multiple access (code division multiple access, CDMA), EVD0, a global system for mobile communications (global system for mobile communications, GSM)/a general packet radio service (general packet radio service, GPRS), or 4G cellular communication such as long term evolution (long term evolution, LTE), or 5G cellular communication. The wireless communications system 141 may communicate with a wireless local area network (wireless local area network, WLAN) by using wireless Internet access (Wi-Fi).

In some embodiments, the wireless communications system 141 may directly communicate with a device by using an infrared link, Bluetooth, or a ZigBee protocol (ZigBee). Other wireless protocols, for example, various vehicle communications systems such as the wireless communications system 141, may include one or more dedicated short range communications (dedicated short range communications, DSRC) devices, and the devices may include public and/or private data communication between vehicles and/or roadside stations.

As shown in FIG. 1, the power supply 160 may supply power to the components of the vehicle 100. In an embodiment, the power supply 160 may be a rechargeable lithium-ion or lead-acid battery. One or more battery packs of such a battery may be configured as the power supply to supply power to the components of the vehicle 100. In some embodiments, the power supply 160 and the energy source 113 may be implemented together, as in some battery electric vehicles.

For example, some or all functions of the vehicle 100 may be controlled by the computer system 150. The computer system 150 may include at least one processor 151, and the processor 151 executes instructions 153 stored in, for example, a non-transient computer-readable medium in a memory 152. The computer system 150 may alternatively be a plurality of computing devices that control individual components or subsystems of the vehicle 100 in a distributed manner.

For example, the processor 151 may be any conventional processor, such as a commercially available central processing unit (central processing unit, CPU).

Optionally, the processor may be a dedicated device such as an application-specific integrated circuit (application-specific integrated circuit, ASIC) or another hardware-based processor. Although FIG. 1 functionally illustrates the processor, the memory, and another element of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some of the processes described herein are performed on a processor disposed inside the vehicle, while others are performed by a remote processor, including performing steps necessary for single manipulation.

In some embodiments, the memory 152 may include the instructions 153 (for example, program logic), and the instructions 153 may be used by the processor 151 to perform various functions of the vehicle 100, including the functions described above. The memory 152 may also include additional instructions, for example, instructions for sending data to, receiving data from, interacting with, and/or controlling one or more of the travel system 110, the sensing system 120, the control system 130, and the peripheral device 140.

For example, in addition to the instructions 153, the memory 152 may also store data, such as a road map, route information, a location, a direction, and a speed of the vehicle, and other such vehicle data, as well as other information. Such information may be used by the vehicle 100 and the computer system 150 during operation of the vehicle 100 in autonomous, semi-autonomous, and/or manual modes.

As shown in FIG. 1, the user interface 170 may be configured to provide information for or receive information from the user of the vehicle 100. Optionally, the user interface 170 may be included in one or more input/output devices in a set of peripheral devices 140, for example, the wireless communications system 141, the vehicle-mounted computer 142, the microphone 143, and the speaker 144.

In this embodiment of the invention, the computer system 150 may control the functions of the vehicle 100 based on inputs received from various subsystems (for example, the travel system 110, the sensing system 120, and the control system 130) and the user interface 170. For example, the computer system 150 may use an input from the control system 130 to control the brake unit 133 to avoid an obstacle that is detected by the sensing system 120 and the obstacle avoidance system 136. In some embodiments, the computer system 150 may be operated to provide control over many aspects of the vehicle 100 and the subsystems of the vehicle.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of the invention.

Optionally, the vehicle 100 may be a self-driving vehicle traveling on a road and may recognize an object in the ambient environment of the vehicle, to determine to adjust a current speed. The object may be another vehicle, a traffic control device, or another type of object. In some examples, each recognized object may be considered independently and may be used to determine a speed to be adjusted to by the self-driving vehicle, based on features of each object, such as a current speed of the object, acceleration of the object, and a spacing between the object and the vehicle.

Optionally, the vehicle 100 or a computing device (for example, the computer system 150, the computer vision system 134, or the memory 152 in FIG. 1) associated with the vehicle 100 may predict behavior of the recognized object based on the features of the recognized object and a status (for example, traffic, rain, or ice on a road) of the ambient environment.

Optionally, the recognized objects rely on behavior of each other. Therefore, all recognized objects may be considered together to predict behavior of a single recognized object. The vehicle 100 can adjust the speed of the vehicle 100 based on the predicted behavior of the recognized object. In other words, the self-driving vehicle can determine, based on the predicted behavior of the object, that the vehicle needs to be adjusted (for example, accelerated, decelerated, or stopped) to a stable state. In this process, another factor may also be considered to determine the speed of the vehicle 100, for example, a horizontal location of the vehicle 100 on a road on which the vehicle travels, curvature of the road, and proximity of static and dynamic objects.

In addition to providing an instruction for adjusting the speed of the self-driving vehicle, the computing device may further provide an instruction for modifying a steering angle of the vehicle 100, so that the self-driving vehicle can follow a given track and/or maintain safe horizontal and vertical distances from an object (for example, a car in a neighboring lane on the road) near the self-driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of the invention.

In a possible implementation, the vehicle 100 shown in FIG. 1 may be a self-driving vehicle. The following describes an autonomous driving system in detail.

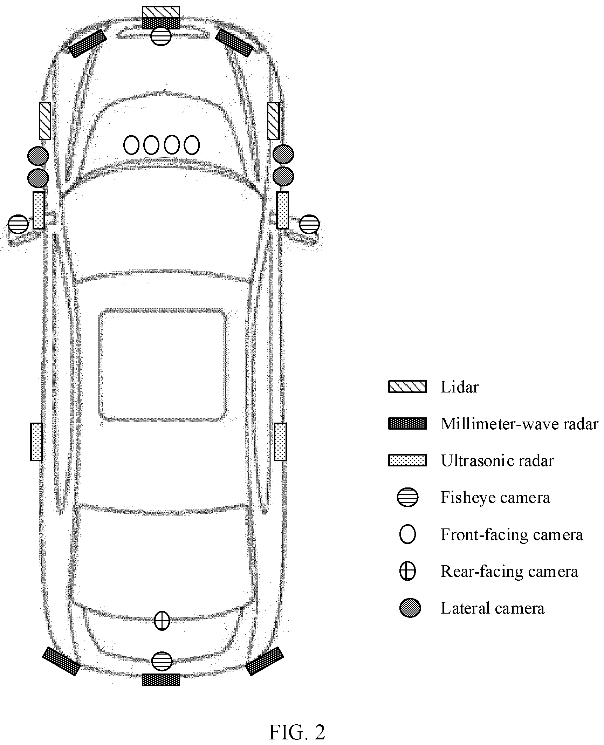

FIG. 2 is a schematic diagram of a structure of a vehicle sensor according to an embodiment of the invention. The vehicle sensor in FIG. 2 may include the laser rangefinder 124 in the vehicle 100 in FIG. 1, may include the vehicle speed sensor 126 in the vehicle 100 in FIG. 1, and may further include another type of sensor.

Specifically, the vehicle may include a plurality of sensors, for example, a lidar, a front-facing camera, a rear-facing camera, a lateral camera, a millimeter-wave radar, an ultrasonic radar, and a fisheye camera. FIG. 2 describes some common sensor types and installation locations. However, a type, a quantity, and a location of a vehicle sensor are not limited in this embodiment of the invention.

For example, the vehicle may include three lidars that respectively face a forward direction, a left direction, and a right direction.

The lidar (light detection and ranging, LiDAR) is used for distance detection. The lidar emits laser light to a to-be-detected target, and then a receiver collects an optical signal reflected by the target. A distance of the target is determined by measuring a round-trip time of an emitted signal. Due to advantages of high coherence, directivity, and monochromaticity of laser light, the lidar can implement a long-distance and high-precision ranging function. In a scanning or multielement array detection manner, the lidar extends a ranging result of a single point to two dimensions, to form a distance image. Currently, the lidar is used in many scenarios such as autonomous driving, three-dimensional building modeling, terrain mapping, a robot, and rendezvous and docking.

The lidar may be configured to recognize an accurate location and a shape of an object.

For another example, the vehicle may include six millimeter-wave radars, including one forward radar, one backward radar, and four lateral radars. The four lateral millimeter-wave radars may be angular millimeter-wave radars, and respectively face a left front direction, a left rear direction, a right front direction, and a right rear direction.

The millimeter-wave radar is a radar that works in a millimeter wave (millimeter wave) band for detection. Generally, a frequency of a millimeter wave is 30 to 300 gigahertz (GHz), that is, a wavelength is 1 to 10 millimeters (mm). The wavelength of the millimeter wave is between a wavelength of a microwave and a wavelength of a centimeter wave.

A detection distance of the millimeter-wave radar is generally 0 to 200 meters. Compared with optical beams such as infrared and laser beams, the millimeter wave has a strong capability of penetrating fog, smoke, and dust. Therefore, the millimeter-wave radar has an all-weather feature.

The millimeter-wave radar may be configured to recognize a distance and a speed of an object.

For another example, the vehicle may include 12 ultrasonic radars.

An ultrasonic transmitter emits an ultrasonic signal to the outside in a specific direction, and starts timing at a moment when the ultrasonic wave is emitted. The ultrasonic wave is propagated through air. When encountering an obstacle during propagation, the ultrasonic wave is immediately reflected and propagated back. The timing is stopped immediately when an ultrasonic receiver receives a reflected wave. In the air, a propagation speed of the ultrasonic wave is 340 meters per second (m/s). A distance between an emission point and the obstacle may be calculated by recording a time t by a timer.

The propagation speed of the ultrasonic wave is relatively low. When a vehicle is traveling at a high speed, ranging using the ultrasonic wave cannot keep up with a real-time change in a distance between vehicles, resulting in a relatively large error. On the other hand, the ultrasonic wave has a large scattering angle and poor directivity. However, in short-distance measurement, an ultrasonic ranging sensor has a great advantage.

For another example, the vehicle may include four front-facing cameras, which are respectively a long-focus camera, a wide-angle camera, and a binocular camera (including two cameras).

The long-focus camera may also be referred to as a long focal length camera, and is a camera whose focal length is longer than a focal length of a standard camera. A focal length of the long-focus camera is generally in a range of 135 to 800 millimeters (mm), and focal lengths of some long-focus cameras are even longer.

The wide-angle camera is a camera whose focal length is shorter than the focal length of the standard camera and whose angle of view is greater than an angle of view of the standard camera. A focal length of an ordinary wide-angle lens is generally 38 to 24 millimeters, and an angle of view of the ordinary wide-angle lens is 60 to 84 degrees. A focal length of an ultra-wide-angle lens is 20 to 13 millimeters, and an angle of view of the ultra-wide-angle lens is 94 to 118 degrees. Because the wide-angle lens has a short focal length and a large angle of view, a relatively large area of scene can be photographed in a relatively short photographing distance range.

The binocular camera may be used for ranging. A ranging principle of the binocular camera is similar to a ranging principle of human eyes. Human eyes can sense a distance of an object due to a difference between images presented by two eyes for the same object, which is also referred to as "parallax". A longer distance from the object leads to smaller parallax, and a shorter distance from the object leads to larger parallax. A size of the parallax corresponds to a distance between the object and the eyes. Parallax between two images captured by the binocular camera is calculated, so that ranging may be performed on a scene in a photographed range of the images.

For another example, the vehicle may include one rear-facing camera.

For another example, the vehicle may include four lateral cameras that respectively face a left front direction, a left rear direction, a right front direction, and a right rear direction. The rear-facing camera and the lateral cameras may be standard cameras or medium-distance cameras.

For another example, the vehicle may include four fisheye cameras that respectively face a forward direction, a backward direction, a left direction, and a right direction.

The fisheye camera is a special lens in ultra-wide-angle cameras. An angle of view of the fisheye camera can reach or exceed a range that human eyes can see. A focal length of the fisheye camera is generally 16 mm or shorter, and the angle of view of the fisheye camera is close to or equal to 180 degrees. To maximize a shooting angle of a lens, a front lens of lenses of such a camera is short in diameter and protrudes in a parabolic shape towards a front part of the lens, and is similar to eyes of a fish.

Currently, in some autonomous driving systems, after a sensor fails, an inoperable part of the system is handed over to a driver. For example, when a speed limit cannot be recognized, the driver is asked to enter a speed limit; and when a lane cannot be recognized, the driver is responsible for controlling a direction. In this way, although driving safety can be strictly ensured, availability of the intelligent driving systems and experience of intelligent driving are reduced.

Different autonomous driving functions have different degrees of dependence on sensors. In the vehicle control solution provided in this embodiment of the invention, different levels of driving policies are formulated based on different degrees of dependence of different sensors on an autonomous driving function and a vehicle running condition, instead of simply exiting all autonomous driving functions directly. In this way, in an autonomous driving process, when one or more sensors fail, the vehicle maintains all or some current autonomous driving functions as much as possible, so that autonomous driving experience of a user can be improved when driving safety is ensured.

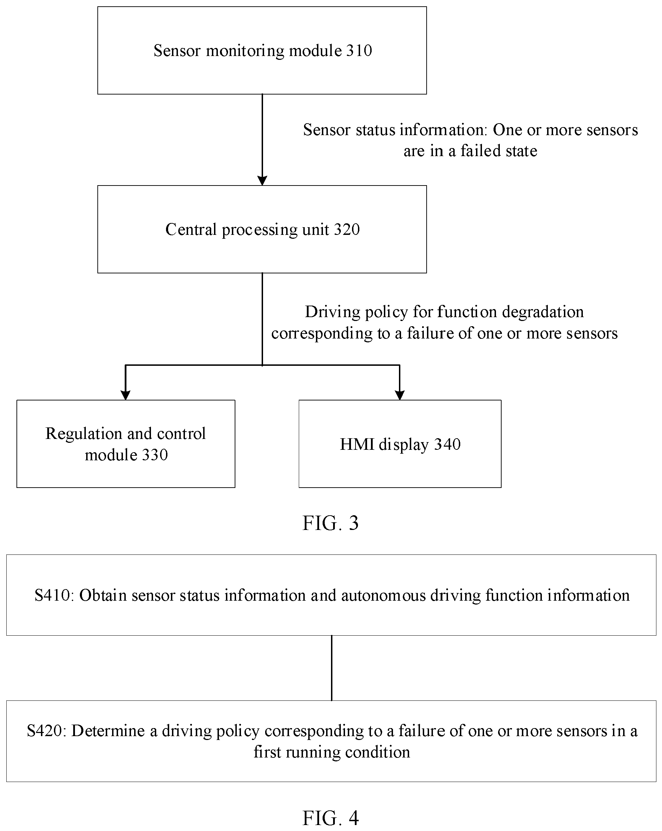

FIG. 3 shows a schematic diagram of an architecture of a simplified vehicle control system according to an embodiment of the invention. The vehicle control system in FIG. 3 may execute different driving policies for failures of different sensors in FIG. 2, and exchange information with a driver.

The vehicle control system shown in FIG. 3 may include a sensor status monitoring module 310, a central processing unit 320, a regulation and control module 330, and a display module 340.

The sensor status monitoring module may monitor in real time whether one or more of the plurality of sensors included in the sensor system 120 in FIG. 1 fail or become abnormal. A form of a sensor failure or abnormality may specifically include: whether the sensor has a signal, whether a sensor signal is abnormal, whether a sensing result of the sensor is abnormal, or the like.

When one or more of the plurality of sensors included in the sensor system 120 fail, the sensor status monitoring module 310 may send failure information of the monitored one or more sensors to the central processing unit 320.

The central processing unit 320 may receive sensor status information sent by the sensor status monitoring module 310. The central processing unit 320 determines, based on a currently running intelligent driving function, a function degradation policy corresponding to a failure of one or more sensors, and sends the driving policy for function degradation to the regulation and control module 330.

Correspondingly, the regulation and control module 330 receives and executes the function degradation policy sent by the central processing unit 320.

The central processing unit may display the driving policy for function degradation on the display module 340 such as a human-computer interaction interface (human machine interface, HMI). The display module includes an interface that can interact with a user, such as a display or a central control screen in a vehicle, to remind the user of a current sensor failure status, a driving policy, and the like.

Optionally, the central processing unit 320 may alternatively express the driving policy in a form of voice, an atmosphere light, vibration, or the like, to remind or warn the driver of the current sensor failure status, the function degradation policy, and the like.

FIG. 4 is a schematic flowchart of a vehicle control method according to an embodiment of the invention. The method in FIG. 4 may be performed by the vehicle in FIG. 1, the sensor in FIG. 2, and the vehicle control system in FIG. 3.

S410: Obtain sensor status information and autonomous driving function information.

The sensor status information may include information indicating that one or more sensors are in a failed state, the autonomous driving function information may be used to indicate a currently running autonomous driving function, and the currently running autonomous driving function includes a plurality of running conditions.

There may be a plurality of forms of sensor failures, for example, the sensor failures may include a sensor signal failure due to a reason such as driving, wiring, or the like, or may further include sensor damage caused by splashing gravel or the like, or may further include sensor sensing performance degradation caused by water, blocking by dirt, or the like. A specific form of the sensor failure is not limited in this embodiment of the invention.

The autonomous driving function may be one of modes such as integrated cruise assist (integrated cruise assist, ICA), ICA) and navigation cruise assist (navigation cruise assist, NCA), in addition to auto parking assist (auto parking assist, APA), remote parking assist (remote parking assist, RPA), and automated valet parking (automated valet parking, AVP) as defined in claim 1. In this embodiment of the invention, the autonomous driving function that is run by the vehicle is merely used as an example, and is not limited.

For example, automatic cruising may be performed in an ICA or NCA mode.

In the ICA mode, a high-precision map is not required, and a sensor may be used to recognize a road. The ICA mode is applicable to a situation in which the vehicle is driving on an expressway.

In the NCA mode, a high-precision map needs to be prepared. In the NCA mode, route planning and cruising may be implemented based on a destination entered into the map by a user. The NCA is applicable to a situation in which the vehicle is driving on an urban road or an expressway.

For example, automated parking may be performed in a mode such as AVP, APA, or RPA.

In the AVP mode, an autonomous driving system replaces a driver to complete driving and parking tasks from a specific area (such as an entrance/exit or an elevator room) of a parking lot to a target parking space. In other words, in a process of parking in the AVP mode, the autonomous driving system may control the vehicle to cruise, and sense an ambient environment, to determine whether there is an empty parking space. After it is determined that there is an empty parking space, a location relationship between the empty parking space and the vehicle may be determined in the APA mode or the RPA mode, and the vehicle may be controlled to travel to the parking space.

The ICA may include working conditions such as cruising, vehicle following, starting/stopping, lane keeping, and lane changing. The NCA and the AVP may include working conditions such as cruising, vehicle following, starting/stopping, lane keeping, lane changing, and turning. The APA and the RPA may include working conditions such as parallel parking, reverse parking, and oblique parking. In this embodiment of the invention, a running condition included in the autonomous driving function that is run by the vehicle is merely used as an example, and is not limited.

S420: Determine a driving policy corresponding to a failure of one or more sensors in a first running condition.

Specifically, the driving policy corresponding to the failure of the one or more sensors in the first running condition is determined based on impact of the failure of the one or more sensors on the first running condition, where the first running condition is any one of the plurality of running conditions.

The driving policy is a driving policy for multi-level function degradation, and includes: maintaining the currently running autonomous driving function, disabling a part of the autonomous driving function, and exiting the current autonomous driving function.

Implementation of the first running condition is related to one or more sub-functions, and the one or more sub-functions include at least one of the following: one or more key sub-functions, one or more non-key sub-functions, and one or more auxiliary sub-functions; and the first running condition is any one of the plurality of running conditions of the current autonomous driving function, a loss of the key sub-function causes inability to implement the first running condition, a loss of the non-key sub-function does not affect implementation of a sub-function other than the non-key sub-function in the first running condition, and a loss of the auxiliary sub-function does not affect the implementation of the first running condition. The first running condition may be any running condition of any autonomous driving function, for example, may be a cruising condition of the ICA, a vehicle following condition of the AVP, or a reverse parking condition of the APA. In this embodiment of the invention, the first working condition is merely used as an example, and is not limited.

In some possible implementations, there is a first type of sensor in the one or more sensors, a failure of the first type of sensor does not affect the implementation of the first running condition, and a driving policy corresponding to the failure of the first type of sensor in the first running condition is maintaining the current autonomous driving function.

It should be understood that the failure of the first type of sensor does not affect the implementation of the first working condition. Therefore, when the first type of sensor fails, the first running condition can still run normally.

In some possible implementations, there is a second type of sensor in the one or more sensors, a failure of the second type of sensor affects implementation of a non-key sub-function in the first running condition, and a driving policy corresponding to the failure of the second type of sensor in the first running condition is disabling a part of the autonomous driving function.

It should be understood that, when the second type of sensor fails, the non-key sub-function in the first running condition cannot be implemented. For example, a turning function cannot be implemented, or a high-precision detection function cannot be implemented. A sub-function other than the non-key sub-function can be implemented. When the non-key sub-function corresponding to the failed second type of sensor is disabled, driving safety and driving route deviation problems are not caused, and the driving policy corresponding to the failure of the second type of sensor in the first running condition is disabling the non-key sub-function associated with the second type of sensor, on the premise that the current autonomous driving function is maintained.

In some possible implementations, there is a third type of sensor in the one or more sensors, a failure of the third type of sensor affects implementation of a key sub-function in the first running condition, and a driving policy corresponding to the failure of the third type of sensor in the first running condition is exiting the current autonomous driving function.

It should be understood that a loss of the key sub-function may cause a driving safety problem or a driving route deviation problem. When the third type of sensor fails, the key sub-function in the first running condition is lost, and the first running condition cannot be implemented. In this case, the driving policy corresponding to the failure of the third type of sensor in the first running condition is exiting the autonomous driving function.

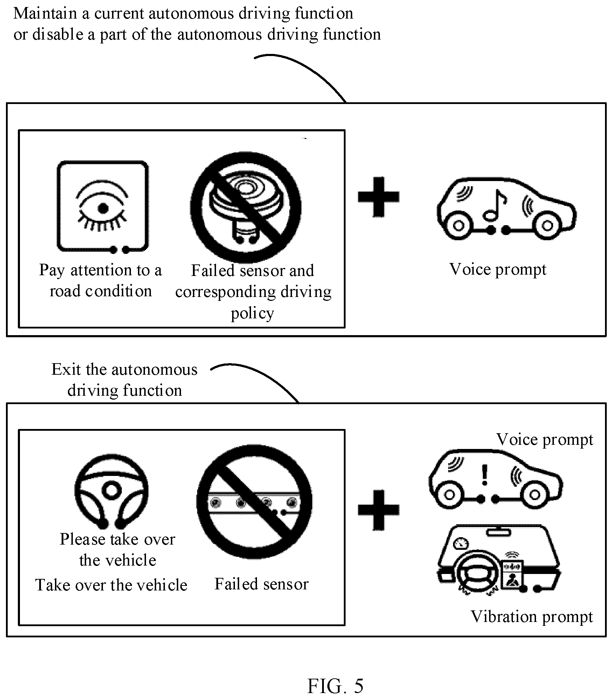

FIG. 5 is a schematic diagram of HMI interaction in a vehicle control method according to an embodiment of the invention.

In an autonomous driving process, a driving policy corresponding to a failure of one or more sensors may be transmitted to a driver in different forms by using the vehicle control system in FIG. 2, so that the driver is notified of a sensor failure status, a driving policy for function degradation, and a related operation.

For a driving policy of maintaining a current autonomous driving function, an HMI notifies the driver of a sensor failure status, and reminds the driver to observe a road condition. A notification and reminding manner may include: displaying, in a form of a text and/or a picture on an in-vehicle screen, the sensor failure status and the road condition that needs to be observed; and broadcasting, by a vehicle voice system, the sensor failure status and the road condition that needs to be observed, or the like.

For a driving policy of disabling a part of the autonomous driving function, the HMI notifies the driver of a sensor failure status and a driving policy for function degradation (for example, decelerating a vehicle or prohibiting a vehicle from turning left), and reminds the driver to observe a road condition. A notification and reminding manner may include: displaying, in a form of a text and/or a picture on a vehicle screen, the sensor failure status, the corresponding driving policy for function degradation, and the road condition that needs to be observed; and broadcasting, by the vehicle voice system, the sensor failure status, the driving policy for function degradation, and the road condition that needs to be observed, or the like.

It should be understood that a first running condition is any one of a plurality of running conditions of the current autonomous driving function.

For a driving policy of exiting the autonomous driving function, the HMI notifies the driver of a sensor failure status, and warns the driver to take over the vehicle. A notification and warning manner includes: displaying, by the HMI in a prominent color such as red, the sensor failure status and a request for taking over the vehicle by the driver; broadcasting, by the vehicle voice system, the sensor failure status and a request for taking over the vehicle by the driver; and requesting, through vibration or an in-vehicle atmosphere light, the driver to take over the vehicle, or the like.

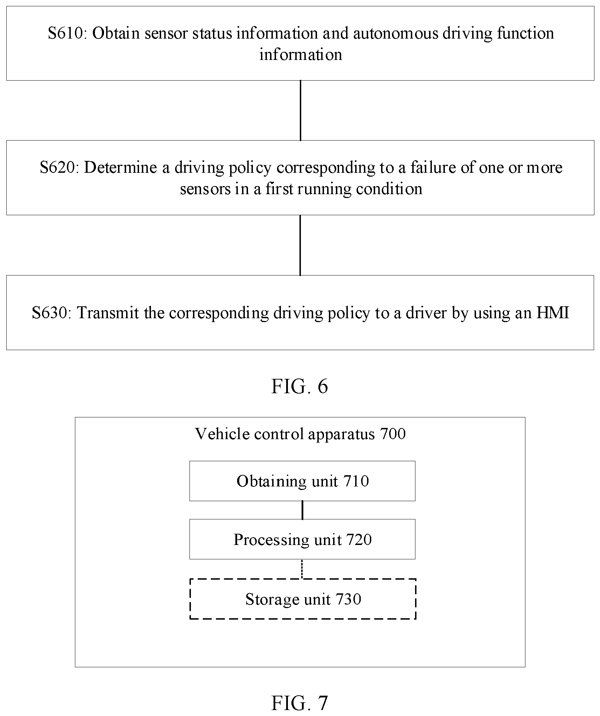

FIG. 6 is a schematic flowchart of a vehicle control method according to an embodiment of the invention. The method in FIG. 6 may be performed by the vehicle in FIG. 1, the sensor in FIG. 2, and the vehicle control system in FIG. 3.

S610: Obtain sensor status information and autonomous driving function information.

The sensor status information may include information indicating that one or more sensors are in a failed state, the autonomous driving function information may be used to indicate a currently running autonomous driving function, and the autonomous driving function includes a plurality of running conditions.

There may be a plurality of forms of sensor failures, for example, the sensor failures may include a sensor signal failure due to a reason such as driving, wiring, or the like, or may further include sensor damage caused by splashing gravel or the like, or may further include sensor sensing performance degradation caused by water, blocking by dirt, or the like. A specific form of the sensor failure is not limited in this embodiment of the invention.

The autonomous driving function may be one of modes such as integrated cruise assist (integrated cruise assist, ICA) and navigation cruise assist (navigation cruise assist, NCA), in addition to auto parking assist (auto parking assist, APA), remote parking assist (remote parking assist, RPA), and automated valet parking (automated valet parking, AVP) as defined in claim 1. In this embodiment of the invention, the autonomous driving function that is run by the vehicle is merely used as an example, and is not limited.

For example, automatic cruising may be performed in an ICA mode. In the ICA mode, a high-precision map is not required. The ICAmode is applicable to a situation in which the vehicle is driving on an expressway.

For another example, automatic cruising may alternatively be performed in an NCA mode. In the NCA mode, a high-precision map needs to be prepared. The NCA mode is applicable to a situation in which the vehicle is driving on an urban road or an expressway.

For example, automated parking may be performed in an AVP mode. In the AVP mode, an autonomous driving system replaces a driver to complete driving and parking tasks from a specific area (such as an entrance/exit or an elevator room) of a parking lot to a target parking space. In other words, in a process of parking in the AVP mode, the autonomous driving system may control the vehicle to cruise, and sense an ambient environment, to determine whether there is an empty parking space. In other words, the autonomous driving system can search for a parking space.

For another example, automated parking may alternatively be performed in an APA or RPA mode. After it is determined that there is an empty parking space, a location relationship between the empty parking space and the vehicle may be determined in the APA mode or the RPA mode, and the vehicle may be controlled to travel to the parking space.

In the APA mode, the autonomous driving system determines the location relationship between the empty parking space and the vehicle, and controls the vehicle to park into the parking space.

In the RPA mode, the driver may leave the vehicle, and use a terminal device such as a mobile phone to send a parking instruction to the autonomous driving system. The autonomous driving system may complete a parking operation based on the received parking instruction. In other words, after receiving the parking instruction, the autonomous driving system may determine the location relationship between the empty parking space and the vehicle, and control the vehicle to park into the parking space. The RPA technology relates to communication between the vehicle and the terminal device, and a commonly used communication manner is Bluetooth.

The ICA may include working conditions such as cruising, vehicle following, starting/stopping, lane keeping, and lane changing. The NCA and the AVP may include working conditions such as cruising, vehicle following, starting/stopping, lane keeping, lane changing, and turning. The APA and the RPA may include working conditions such as parallel parking, reverse parking, and oblique parking. In this embodiment of the invention, a running condition included in the autonomous driving function that is run by the vehicle is merely used as an example, and is not limited.

A first running condition may be a cruising condition of the ICA mode, a vehicle following condition of the AVP mode, or a reverse parking condition of the APA mode. The first running condition may be any running condition of any autonomous driving function. This is not limited in this embodiment of the invention.

S620: Determine a driving policy corresponding to a failure of one or more sensors in the first running condition.

Specifically, the driving policy corresponding to the failure of the one or more sensors in the first running condition is determined based on impact of the failure of the one or more sensors on the first running condition, where the first running condition is any one of the plurality of running conditions.

In some possible implementations, the autonomous driving policy is a driving policy for multi-level function degradation, and includes: maintaining the currently running autonomous driving function, disabling a part of the autonomous driving function, and exiting the current autonomous driving function.

Implementation of the first running condition is related to one or more sub-functions, and the one or more sub-functions include at least one of the following: one or more key sub-functions, one or more non-key sub-functions, and one or more auxiliary sub-functions; and the first running condition is any one of the plurality of running conditions of the current autonomous driving function, a loss of the key sub-function causes inability to implement the first running condition, a loss of the non-key sub-function does not affect implementation of a sub-function other than the non-key sub-function in the first running condition, and a loss of the auxiliary sub-function does not affect the implementation of the first running condition. The first running condition may be any running condition of any autonomous driving function, for example, may be a cruising condition of the ICA, a vehicle following condition of the AVP, or a reverse parking condition of the APA.

In this embodiment of the invention, the first working condition is merely used as an example, and is not limited. In some possible implementations, the one or more sensors include a first type of sensor, a failure of the first type of sensor does not affect the implementation of the first running condition, and a driving policy corresponding to the failure of the first type of sensor in the first running condition is maintaining the current autonomous driving function.

It should be understood that the failure of the first type of sensor does not affect the implementation of the first running condition. Therefore, when the first type of sensor fails, the first running condition can still run normally.

In some possible implementations, the one or more sensors include a second type of sensor, a failure of the second type of sensor affects implementation of a non-key sub-function in the first running condition, and a driving policy corresponding to the failure of the second type of sensor in the first running condition is disabling a part of the autonomous driving function.

It should be understood that, when the second type of sensor fails, the non-key sub-function associated with the second type of sensor cannot be implemented. For example, an oncoming vehicle at an intersection (a long-distance target in a forward direction) cannot be accurately recognized, or high-precision detection cannot be implemented. A sub-function other than the non-key sub-function can be implemented. When the non-key sub-function associated with the failed second type of sensor is disabled, driving safety and driving route deviation problems are not caused, and the driving policy corresponding to the failure of the second type of sensor in the first running condition is disabling the non-key sub-function associated with the second type of sensor, on the premise that the current autonomous driving function is maintained.

In some possible implementations, the one or more sensors include a third type of sensor, a failure of the third type of sensor affects implementation of a key sub-function in the first running condition, and a driving policy corresponding to the failure of the third type of sensor in the first running condition is exiting the current autonomous driving function.

It should be understood that a loss of the key sub-function may cause a driving safety problem or a driving route deviation problem. When the third type of sensor fails, the key sub-function in the first running condition is lost, and the first running condition cannot be implemented. In this case, the driving policy corresponding to the failure of the third type of sensor in the first running condition is exiting the autonomous driving function. In some possible implementations, the first type of sensor includes a first sensor unit, the first sensor unit is associated with a first sub-function, there is another sensor unit that is not failed and that is associated with the first sub-function, and the first sub-function is any one of the one or more sub-functions in the first working condition.

In some possible implementations, the first type of sensor further includes a second sensor unit, the second sensor unit is associated with a second auxiliary sub-function, and the second auxiliary sub-function is any one of the one or more auxiliary sub-functions.

In some possible implementations, the second type of sensor includes a third sensor unit, the third sensor unit is associated with a third non-key sub-function, there is no other failed sensor unit associated with the third non-key sub-function, and the third non-key sub-function is any one of the one or more non-key sub-functions in the first working condition.

In some possible implementations, the second type of sensor further includes a fourth sensor unit, the fourth sensor unit is associated with a fourth key sub-function and a fourth non-key sub-function, there is an ambient environment that compensates for the fourth key sub-function and another sensor unit that is not failed and that senses the ambient environment, the ambient environment includes a vehicle, a railing, and the like, the fourth key sub-function is any one of the one or more key sub-functions in the first running condition, and the fourth non-key sub-function is any one of the one or more non-key sub-functions in the first running condition.

In some possible implementations, the third type of sensor includes a fifth sensor unit, the fifth sensor unit is associated with a fifth key sub-function, and there is no other sensor unit that is not failed and that is associated with the fifth key sub-function, or there is no at least one of the following: an ambient environment that compensates for the fifth key sub-function, and another sensor unit that is not failed and that senses the ambient environment; and the fifth key sub-function is any one of the one or more key sub-functions in the first running condition.

It should be understood that the sensor unit may be a single sensor, or may be a group of two or more sensors. This is not limited in the invention.

It should be understood that, in an intelligent vehicle, sub-functions associated with different sensor units may be the same or different. A sensor unit may be simultaneously associated with a plurality of sub-functions, or may be associated with only one sub-function. This is not limited in the invention.

One or more sensors may fail in an autonomous driving process. In this embodiment of the invention, radical processing policies (for details, refer to Table 1 to Table 27) and conservative processing policies (for details, refer to Table 28 to Table 30) are provided for failures of various sensors.

In a radical processing policy, when a sensor fails, the system maintains normal running of the function as much as possible. In a conservative processing policy, when a sensor fails, the system prefers to hand over a control right of the vehicle to the driver.

In an automatic cruising process, for example, in an autonomous driving process in the ICA or NCA mode, when a sensor in FIG. 2 fails, for a radical processing policy, refer to descriptions in Table 1 to Table 11.

Both the ICA mode and the NCA mode relate to vertical control of the vehicle in situations such as vehicle cruising, vehicle following, and starting/stopping, and horizontal control of the vehicle in situations such as lane keeping and lane changing. In addition, the NCA mode further relates to a vehicle turning situation, and the ICA mode is not applicable (not applicable, N/A) to the vehicle turning situation.

When one of front-facing cameras fails, a radical processing policy in the automatic cruising process is shown in Table 1.

**Table 1**

| Failure of the front-facing camera | | ICA | | | NCA | | |
|---|---|---|---|---|---|---|---|
| | | Normal running | Degradation policy | Exit | Normal running | Degradation policy | Exit |
| Vertical control | Cruising | √ | | | √ One of front-facing cameras other than a long-focus camera fails | If the long-focus camera fails, deceleration is performed at an intersection | |
| | Vehicle following | | | | √ | | |
| | Starting/Stopping | √ | | | | | |
| Horizontal control | Lane keeping | | | | | | |
| | Lane changing | | | | | | |
| | Turning | N/A | | | √ | | |

In a cruising condition of the NCA mode, if the long-focus camera fails, recognition of a traffic signal light (that is, a traffic light) that is far away from the vehicle and recognition of an object type of an oncoming vehicle are affected. Therefore, the vehicle may be controlled to be decelerated before the vehicle is about to travel to an intersection, so that an enough time is reserved for recognition of the traffic light and the oncoming vehicle. It may also be understood that a failure of the long-focus camera affects a non-key sub-function of recognizing a distant target in the cruising condition, and the vehicle cannot travel at a high speed. A corresponding driving policy is disabling a high-speed traveling function (decelerating).

In any working condition of the ICA or NCA mode, if a front-facing camera other than the long-focus camera fails, and there is another front-facing camera group that is not failed and that can be associated with a sub-function of the failed front-facing camera, it may also be understood that the another front-facing camera group that is not failed may compensate for a loss of sensing information caused by a failure of the front-facing camera. Therefore, any working condition of the ICA or NCA mode can still run normally, and a corresponding driving policy is maintaining a current autonomous driving function.

A cruising condition of the ICA mode does not relate to control of the vehicle at an intersection, and a driving policy corresponding to the failure of the long-focus camera is completely the same as the driving policy corresponding to the failure of the another front-facing camera.

Table 1 is limited to the driving policy used when one front-facing camera fails. In any running condition of the ICA or NCA mode, if two or more front-facing cameras fail, and there is no other front-facing camera group that is not failed and that can be associated with sub-functions of the failed front-facing cameras (it may also be understood that forward information required for safe driving of the vehicle cannot be obtained), key sub-functions associated with the two or more front-facing cameras cannot be implemented. In this case, the autonomous driving function may be exited.

When one or more of left cameras fail, a radical processing policy in the automatic cruising process is shown in Table 2.

**Table 2**

| Failure of the left camera | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | | Do not change to a lane on the left | | | Do not change to a lane on the left | |
| | Turning | N/A | | | | | |

When the left camera fails, a non-key sub-function of accurately recognizing a left target cannot be implemented. Therefore, the vehicle cannot change to a lane on the left. Generally, in the ICA or NCA mode, prohibiting the vehicle from changing to a lane on the left does not cause a problem such as a safety problem or a route deviation problem. Only the failure of the left camera does not affect observation of a target located on a right side of the vehicle. Therefore, in a lane changing condition, the vehicle can still change to a lane on the right. Therefore, in the lane changing condition of the ICA or NCA mode, a driving policy may be prohibiting a change to a lane on the left.

In a turning condition of the NCA mode, a left target needs to be observed regardless of turning left or right. Therefore, when it is determined that one of the left cameras fails, a key sub-function of observing a left target cannot be implemented. In this case, the NCA may be exited.

In the ICA or NCA mode, the left cameras can provide an auxiliary target recognition function for cruising, vehicle following, starting/stopping, and lane keeping conditions. It may also be understood that the left cameras are associated with an auxiliary sub-function of recognizing a left target in the cruising, vehicle following, starting/stopping, and lane keeping conditions. A loss of the auxiliary sub-function does not affect implementation or normal running of the cruising, vehicle following, starting/stopping, and lane keeping conditions. Therefore, in the ICA or NCA mode, when the left camera fails, the vehicle can still maintain the current autonomous driving function.

When one or more of right cameras fail, a radical processing policy in the automatic cruising process is shown in Table 3.

**Table 3**

| Failure of the right camera | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | | Do not change to a lane on the right | | | Do not change to a lane on the right | |
| | Turning | N/A | | | | | |

Similar to the situation in which the left camera fails, when the right camera fails, a non-key sub-function of accurately recognizing a right target cannot be implemented. Therefore, the vehicle cannot change to a lane on the right. Generally, in the ICA or NCA mode, prohibiting the vehicle from changing to a lane on the right does not affect normal driving of the vehicle, for example, does not cause a safety problem or a route deviation problem. Only the failure of the right camera does not affect observation of a target located on a left side of the vehicle. Therefore, in a lane changing condition, the vehicle can still change to a lane on the left. Therefore, in the lane changing condition of the ICA or NCA mode, a driving policy may be prohibiting a change to a lane on the right.

In a turning condition of the NCA mode, a right target needs to be observed regardless of turning left or right. Therefore, when it is determined that one of the right cameras fails, a key sub-function of observing a right target cannot be implemented. In this case, the NCA may be exited.

In the ICA or NCA mode, it may be considered that the right cameras provide auxiliary information of target recognition for cruising, vehicle following, starting/stopping, and lane keeping conditions. It may be understood that the right cameras are associated with an auxiliary sub-function of the cruising, vehicle following, starting/stopping, and lane keeping conditions. In the ICA or NCA mode, the failure of the right camera does not affect implementation of working conditions such as cruising, vehicle following, starting/stopping, and lane keeping. Therefore, the cruising, vehicle following, starting/stopping, and lane keeping conditions of the ICA or NCA mode can run normally, and the vehicle can still maintain the current autonomous driving function.

When a rear-facing camera fails, a radical processing policy in the automatic cruising process is shown in Table 4.

**Table 4**

| Failure of the rear-facing camera | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | | Do not automatically change a lane | | | Do not automatically change a lane | |
| | Turning | N/A | | | √ | | |

For lane changing, a rear target needs to be observed, to prevent a collision between the vehicle and a rear vehicle located on a target lane. When the rear-facing camera fails, a non-key sub-function of accurately recognizing a rear target cannot be implemented. Therefore, automatic lane changing cannot be implemented. Generally, in the ICA or NCA mode, prohibiting the vehicle from changing a lane does not cause a problem such as a safety problem or a route deviation problem. Therefore, in a lane changing condition of the ICA or NCA mode, a lane changing function may be disabled when the rear-facing camera fails.

In a turning condition of the NCA mode, observation of the rear target relies mainly on the left camera or the right camera. The rear-facing camera only provides auxiliary information of target recognition for the turning condition. The failure of the rear-facing camera does not affect implementation of the turning condition, and the turning condition can still run normally. Therefore, the vehicle can maintain the current autonomous driving function.

It may be considered that the rear-facing camera is associated with an auxiliary target recognition function of cruising, vehicle following, starting/stopping, and lane keeping conditions of the ICA or NCA mode. Therefore, the failure of the rear-facing camera does not affect implementation of the cruising, vehicle following, starting/stopping, and lane keeping conditions. In the cruising, vehicle following, starting/stopping, and lane keeping conditions of the ICA or NCA mode, when the rear-facing camera fails, a corresponding driving policy may be maintaining the current autonomous driving function.

When one or more of fisheye cameras fail, a radical processing policy in the automatic cruising process is shown in Table 5.

**Table 5**

| Failure of the fisheye camera | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | √ | | | √ | | |
| | Turning | N/A | | | √ | | |

The fisheye camera is mainly used for parking. It may be considered that the fisheye camera provides an auxiliary target recognition function for an autonomous driving function in the ICA or NCA mode. Therefore, the failure of the fisheye camera does not affect implementation of each working condition of the ICA or NCA. Therefore, when one or more fisheye cameras fail, each running condition can run normally, and the vehicle can still maintain the autonomous driving function in the ICA or NCA mode.

When a front-facing lidar fails, a radical processing policy in the automatic cruising process is shown in Table 6.

**Table 6**

| Failure of the front-facing lidar | | ICA | | | NCA | | |
|---|---|---|---|---|---|---|---|
| | | Normal running | Degradation policy | Exit | Normal running | Degradation policy | Exit |
| Vertical control | Cruising | | | √ | | | √ |
| | Vehicle following | | | √ | | | √ |
| | Starting/Stopping | | | √ | | | √ |
| Horizontal control | Lane keeping | | | √ | | | √ |
| | Lane changing | | | √ | | | √ |
| | Turning | N/A | | | | | √ |

The front-facing lidar and the front-facing camera together can sense a front target. When the front-facing lidar fails, an accurate location and shape of the front target of the vehicle cannot be recognized, and accuracy of sensing the front target cannot be ensured. It may be understood that when the front-facing lidar fails, a key sub-function associated with the front-facing lidar is lost, and each running condition of the ICA or NCA mode cannot be implemented. Therefore, in any running condition of the ICA or the NCA, when the front-facing lidar fails, a corresponding driving policy may be exiting the autonomous driving function in the ICA or NCA mode.

When one or more of lateral lidars fail, a radical processing policy in the automatic cruising process is shown in Table 7.

**Table 7**

| Failure of the lateral lidar | | ICA | | | NCA | | |
|---|---|---|---|---|---|---|---|
| | | Normal running | Degradation policy | Exit | Normal running | Degradation policy | Exit |
| Vertical control | Cruising | | | √ | | | √ |
| | Vehicle following | | | √ | | | √ |
| | Starting/Stopping | | | √ | | | √ |
| Horizontal control | Lane keeping | | | √ | | | √ |
| | Lane changing | | | √ | | | √ |
| | Turning | N/A | | | | | √ |

The lateral lidar is configured to accurately recognize an accurate location and shape of a target located on a side of the vehicle. When the lateral lidar fails, a key sub-function associated with the lateral lidar is lost, and each running condition of the ICA or NCA mode cannot be implemented. Therefore, in any running condition of the ICA or the NCA, when the lateral lidar fails, a corresponding driving policy is exiting the autonomous driving function in the ICA or NCA mode.

When a front-facing millimeter-wave radar fails, a radical processing policy in the automatic cruising process is shown in Table 8.

**Table 8**

| Failure of the front-facing millimeter-wave radar | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | | Increase a distance between the vehicle and a vehicle in front | | | Increase a distance between the vehicle and a vehicle in front | |

| | Starting/Stopping | | Increase an interval between a start time of the vehicle and a start time of the vehicle in front | | | Increase an interval between a start time of the vehicle and a start time of the vehicle in front | |
|---|---|---|---|---|---|---|---|
| Horizontal control | Lane keeping | √ | | | √ | | |
| | Lane changing | √ | | | √ | | |
| | Turning | N/A | | | √ | | |

The front-facing millimeter-wave radar may be mainly configured to recognize a target far ahead and track a speed of the vehicle in front. When the front-facing millimeter-wave radar fails, determining of the speed of the vehicle in front relies only on the front-facing lidar and the front-facing camera, resulting in a relatively great error. Therefore, in vehicle following and starting/stopping conditions of the ICA or NCA mode, when the front-facing millimeter-wave radar fails, a following distance may be increased, and an interval between starting of the vehicle in front and starting of the vehicle may be increased (that is, the distance between the vehicle and the vehicle in front may be increased), to reduce or eliminate impact of a determining error in a speed of a target in front on driving safety of the vehicle.

It may be considered that the front-facing millimeter-wave radar only provides an auxiliary target recognition function for cruising, lane keeping, lane changing, and turning conditions of the ICA or NCA mode. Therefore, the failure of the front-facing millimeter-wave radar does not affect implementation of the cruising, lane keeping, lane changing, and turning conditions. In the cruising, lane keeping, lane changing, and turning conditions of the ICA or NCA mode, when the front-facing millimeter-wave radar fails, the autonomous driving function in the ICA or NCA mode can still run normally.

When one or more of angular millimeter-wave radars fail, a radical processing policy in the automatic cruising process is shown in Table 9.

**Table 9**

| Failure of the angular millimeter-wave radar | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | √ | | | √ | | |
| | Turning | N/A | | | √ | | |

Sensing of a lateral target of the vehicle relies mainly on the camera and the lidar. The angular millimeter-wave radar may be configured to assist in recognizing the lateral target of the vehicle.

In the automatic cruising process, it may be considered that the angular millimeter-wave radar only provides an auxiliary target recognition function. In other words, the failure of the angular millimeter-wave radar does not affect implementation of any running condition of the ICA or NCA mode. Therefore, when the angular millimeter-wave radar fails, the autonomous driving function in the ICA or NCA mode can still run normally.

When a rear-facing millimeter-wave radar fails, a radical processing policy in the automatic cruising process is shown in Table 10.

**Table 10**

| Failure of the rear-facing millimeter-wave radar | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | | Do not change a lane if there is a vehicle behind on a target lane | | | Do not change a lane if there is a vehicle behind on a target lane | |
| | Turning | N/A | | | √ | | |

In the vehicle shown in FIG. 2, no lidar is disposed in the rear. In other words, a rear side of the vehicle is in a blind area of each lidar. Observation and sensing of a target located on the rear side of the vehicle may rely mainly on the rear-facing camera and the rear-facing millimeter-wave radar.

When the rear-facing millimeter-wave radar fails, information such as a location and a speed of the rear target cannot be accurately estimated. However, when the vehicle changes the lane to the target lane, a vehicle that is behind the vehicle and that is located on the target lane needs to be sensed, and a lane changing time or the like of the vehicle needs to be adjusted based on a driving status of the vehicle behind. Therefore, in a lane changing condition of the ICA or NCA mode, when the rear-facing camera detects that there is a rear target such as a vehicle on the target lane, the failure of the rear-facing millimeter-wave radar affects lane changing, and a corresponding driving policy is prohibiting lane changing.

It should be understood that, generally, in the ICA or NCA mode, prohibiting the vehicle from changing a lane does not cause a safety problem or a route deviation problem.

When one or more of ultrasonic radars fail, a radical processing policy in the automatic cruising process is shown in Table 11.

**Table 11**

| Failure of the ultrasonic radar | | ICA | | | NCA | | |
|---|---|---|---|---|---|---|---|
| | | Normal running | Degradation policy | Exit | Normal running | Degradation policy | Exit |
| Vertical control | Cruising | √ | | | √ | | |
| | Vehicle following | √ | | | √ | | |
| | Starting/Stopping | √ | | | √ | | |
| Horizontal control | Lane keeping | √ | | | √ | | |
| | Lane changing | √ | | | √ | | |
| | Turning | N/A | | | √ | | |

The ultrasonic radar is mainly used for parking. It may be considered that the ultrasonic radar only provides an auxiliary target recognition function for the autonomous driving function in the ICA or NCA mode. The failure of the ultrasonic radar does not affect implementation of each working condition of the ICA or NCA mode. Therefore, when the ultrasonic radar fails, each running condition can run normally, and the vehicle can still maintain the autonomous driving function in the ICA or NCA mode.

In an automated parking process, when a sensor in FIG. 4 fails, for a radical processing policy, refer to descriptions in Table 12 to Table 33.

In a process in which the vehicle searches for and travels to a parking space, for example, in an autonomous driving process in the AVP mode, when the sensor fails, for a radical processing policy, refer to descriptions in Table 12 to Table 22. Generally, compared with the ICA mode, the NCA mode, and the like, in the process in which the vehicle searches for and travels to a parking space, a driving speed of the vehicle is relatively low.

When one of front-facing cameras fails, a radical processing policy in a process in which the vehicle autonomously travels to a parking space is shown in Table 12.

**Table 12**

| Failure of the front-facing camera | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | √ | | |
| | Turning | √ | | |

In a process in which the vehicle travels to a parking space, the vehicle generally travels in an area such as a parking lot or a garage, and generally does not relate to recognition of a signal indicator such as a traffic light at an intersection.

There are a plurality of front-facing cameras. When one of the front-facing cameras fails, it is considered that another front-facing camera that is not failed may be associated with a sub-function of the failed front-facing camera, and it may also be understood that another front-facing camera group that is not failed may compensate for a loss of sensing information caused by a failure of the front-facing camera. Therefore, when one of the front-facing cameras fails, each running condition can run normally, and the vehicle can still maintain an autonomous driving function in the current AVP mode.

Table 12 is limited to the driving policy used when one front-facing camera fails. In any running condition, if two or more front-facing cameras fail, and there is no other front-facing camera group that is not failed and that can be associated with sub-functions of the failed front-facing cameras (it may also be understood that forward information required for safe driving of the vehicle cannot be obtained in this case), key sub-functions associated with the two or more failed front-facing cameras cannot be implemented. Therefore, in any working condition, when two or more front-facing cameras fail, the driving policy is exiting the autonomous driving function.

When one or more of left cameras fail, a radical processing policy in a process in which the vehicle autonomously travels to a parking space is shown in Table 13.

**Table 13**

| Failure of the left camera | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | | Do not change to a lane on the left | |
| | Turning | | | |

When the left camera fails, a driving policy in each running condition of the AVP mode is the same as the driving policy in the NCA mode, and details are not described herein.

When one or more of right cameras fail, a radical processing policy in a process in which the vehicle autonomously travels to a parking space is shown in Table 14.

**Table 14**

| Failure of the right camera | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | | Do not change to a lane on the right | |
| | Turning | | | √ |

When the right camera fails, a driving policy in each running condition of the AVP mode is the same as the driving policy in the NCA mode, and details are not described herein.

When a rear-facing camera fails, a processing policy in a process in which the vehicle autonomously travels to a parking space is shown in Table 15.

**Table 15**

| Failure of the rear-facing camera | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | | Cannot automatically change a lane | |
| | Turning | | | |

When the rear-facing camera fails, a driving policy in each running condition of the AVP mode is the same as the driving policy in the NCA mode, and details are not described herein.

When one or more of fisheye cameras fail, a radical processing policy in a process in which the vehicle autonomously travels to a parking space is shown in Table 16.

**Table 16**

| Failure of the fisheye camera | | Normal running | Degradation policy | Exit |
|---|---|---|---|---|
| Vertical control | Cruising | | | √ |
| | Vehicle following | | | √ |
| | Starting/Stopping | | | √ |
| Horizontal control | Lane keeping | | | √ |
| | Lane changing | | | √ |
| | Turning | | | √ |

A lidar has a blind area near the vehicle. Each camera other than the fisheye camera also has a blind area near the vehicle. In each running condition of the AVP mode, if the fisheye camera fails, the autonomous driving system cannot implement a key sub-function of accurately sensing a nearby obstacle. Therefore, when the fisheye camera fails, a driving policy corresponding to each running condition is exiting the autonomous driving function in the AVP mode.

When a front-facing lidar fails, a radical processing policy in a process in which the vehicle autonomously travels to a parking space is shown in Table 17.

**Table 17**

| Failure of the front-facing lidar | | Normal running | Degradation policy | Exit |
|---|---|---|---|---|
| Vertical control | Cruising | | | √ |
| | Vehicle following | | | √ |
| | Starting/Stopping | | | √ |
| Horizontal control | Lane keeping | | | √ |
| | Lane changing | | | √ |
| | Turning | | | √ |

The front-facing lidar and the front-facing camera can be used to sense a front target. In the process in which the vehicle autonomously travels to a parking space, there may be an obstacle such as a pillar, a road pile, or a barrier gate. A location of a front obstacle may be determined by using the front-facing lidar. When the front-facing lidar fails, a location and a shape of a front obstacle cannot be accurately sensed. It may be understood that when the front-facing lidar fails, a key sub-function associated with the front-facing lidar is lost, and each running condition cannot be implemented. Therefore, when the front-facing lidar fails, a driving policy corresponding to each running condition is exiting the autonomous driving function in the AVP mode.

When one or more of lateral lidars fail, a radical processing policy in a process in which the vehicle autonomously travels to a parking space is shown in Table 18.

**Table 18**

| Failure of the lateral lidar | | Normal running | Degradation policy | Exit |
|---|---|---|---|---|
| Vertical | Cruising | | | √ |
| control | Vehicle following | | | √ |
| | Starting/Stopping | | | √ |
| Horizontal control | Lane keeping | | | √ |
| | Lane changing | | | √ |
| | Turning | | | √ |

The lateral lidar may be configured to accurately recognize an accurate location and shape of a target located on a side of the vehicle. When the lateral lidar fails, a key sub-function associated with the lateral lidar cannot be implemented. Therefore, when the lateral lidar fails, a driving policy corresponding to each running condition is exiting the autonomous driving function in the AVP mode.

When a front-facing millimeter-wave radar fails, a radical processing policy in a process in which the vehicle autonomously travels to a parking space is shown in Table 19.

**Table 19**

| Failure of the front-facing millimeter-wave radar | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | √ | | |
| | Turning | √ | | |

In the process in which the vehicle autonomously travels to a parking space, a driving speed of the vehicle is relatively low. A front target may be sensed by using the front-facing camera and the front-facing lidar, and a nearby obstacle may be sensed by using an ultrasonic sensor and the fisheye camera. The front-facing millimeter-wave radar angle can provide auxiliary target recognition information. When the driving speed of the vehicle is relatively low, it may be considered that the failure of the front-facing millimeter-wave radar does not affect implementation of the autonomous driving function in the AVP mode. Therefore, when the front-facing millimeter-wave radar fails, the autonomous driving function in the AVP mode can still be maintained in each running condition.

When one or more of angular millimeter-wave radars fail, a radical processing policy in a process in which the vehicle autonomously travels to a parking space is shown in Table 20.

**Table 20**

| Failure of the angular millimeter-wave radar | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | √ | | |
| | Turning | √ | | |

In the process in which the vehicle autonomously travels to a parking space, a driving speed of the vehicle is relatively low. A lateral target may be sensed by using a lateral camera and the lateral lidar, and a nearby obstacle may be sensed by using an ultrasonic sensor and the fisheye camera. The angular millimeter-wave radar angle can be associated with an auxiliary target recognition function. When the driving speed of the vehicle is relatively low, it may be considered that the failure of the angular millimeter-wave radar does not affect implementation of the autonomous driving function in the AVP mode. Therefore, when the angular millimeter-wave radar fails, the autonomous driving function in the AVP mode can still be maintained in each running condition.

When a rear-facing millimeter-wave radar fails, a radical processing policy in a process in which the vehicle autonomously travels to a parking space is shown in Table 21.

**Table 21**

| Failure of the rear-facing millimeter-wave radar | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | √ | | |
| | Turning | √ | | |

In the process in which the vehicle autonomously travels to a parking space, a driving speed of the vehicle is relatively low. A lateral target may be sensed by using a lateral camera and the lateral lidar, and a nearby obstacle may be sensed by using an ultrasonic sensor and the fisheye camera. The rear-facing millimeter-wave radar angle can provide an auxiliary target recognition function. When the driving speed of the vehicle is relatively low, it may be considered that the failure of the rear-facing millimeter-wave radar does not affect implementation of the autonomous driving function in the AVP mode. Therefore, when the rear-facing millimeter-wave radar fails, the autonomous driving function in the AVP mode can still be maintained in each running condition.

When an ultrasonic radar fails, a radical processing policy in a process in which the vehicle autonomously travels to a parking space is shown in Table 22.

**Table 22**

| Failure of the ultrasonic radar | | Normal running | Degradation policy | Exit |
|---|---|---|---|---|
| Vertical control | Cruising | √ | | |
| | Vehicle following | √ | | |
| | Starting/Stopping | √ | | |
| Horizontal control | Lane keeping | √ | | |
| | Lane changing | √ | | |
| | Turning | √ | | |

The ultrasonic radar is mainly configured to detect a nearby obstacle. When the ultrasonic radar fails, a nearby target can still be sensed by using the fisheye camera. Therefore, when the ultrasonic radar fails, the autonomous driving function in the AVP mode can still be maintained in each running condition.

In some embodiments, when the ultrasonic radar and the fisheye camera simultaneously fail, the vehicle cannot detect a nearby target. Therefore, when the ultrasonic radar fails, the autonomous driving function in the AVP mode can be exited in each running condition.

Three manners may be used in a process in which the vehicle autonomously parks into a parking space. In a first manner, the lidar, the fisheye camera, and the ultrasonic radar are simultaneously used. In a second manner, the fisheye camera and the ultrasonic radar are simultaneously used. In a third manner, sensing is performed only by using the fisheye camera or the ultrasonic radar.

Compared with the first manner, the second manner reduces precision of obstacle detection, but does not affect implementation of a function of autonomously parking into a parking space. Using the third manner to perform sensing further reduces precision of obstacle detection. In addition, when only the ultrasonic radar is used to perform sensing to implement the function of autonomously parking into a parking space, an object such as a wall, a fence, or another vehicle needs to be available around the parking space to indicate a range of the parking space and assist in positioning.

When all sensors are normal, the first manner may be used to perform sensing. When the lidar fails, the second manner may be used to perform sensing. When the fisheye camera or the ultrasonic radar fails, the third manner may be used to perform sensing.

In the process in which the vehicle autonomously parks into a parking space, for example, in the APA or RPA mode, when a sensor fails, for a radical processing policy, refer to descriptions in Table 23 to Table 27. Generally, in the process in which the vehicle autonomously parks into a parking space, a driving speed of the vehicle is relatively low, and only a relatively close target needs to be sensed.

When one or more of a front-facing camera, a left camera, a right camera, or a rear-facing camera fail, a radical processing policy in the process in which the vehicle autonomously parks into a parking space is shown in Table 23.

**Table 23**

| Failure of the front-facing camera, the left camera, the right camera, and the rear-facing camera | Normal running | Degradation policy | Exit |
|---|---|---|---|
| Parallel parking | √ | | |
| Reverse parking | √ | | |
| Oblique parking | √ | | |

In the process in which the vehicle autonomously parks into a parking space, rapid and accurate recognition and modeling of distant and nearby environments and obstacles rely mainly on the lidar, the fisheye camera, and the ultrasonic radar. It may be considered that the front-facing camera, the left camera, the right camera, and the rear-facing camera only provide an auxiliary target recognition function for an autonomous driving function in the APA or RPA mode. Failure of one or more of the front-facing camera, the left camera, the right camera, and the rear-facing camera does not affect implementation of the autonomous driving function in the APA or RPA mode. Therefore, the autonomous driving function in the APA or RPA mode can still be maintained in each running condition.

When one or more of fisheye cameras fail, a radical processing policy in the process in which the vehicle autonomously parks into a parking space is shown in Table 24.

**Table 24**

| Failure of the fisheye camera | Normal running | Degradation policy | Exit |
|---|---|---|---|
| Parallel parking | | Use the ultrasonic radar to perform sensing | |
| Reverse parking | | Use the ultrasonic radar to perform sensing | |
| Oblique parking | | Use the ultrasonic radar to perform sensing | |

The fisheye camera is mainly configured to sense a nearby environment during parking. When the fisheye camera fails, if an ambient environment such as a vehicle, a railing, or a wall that can indicate a boundary of an empty parking space exists on both sides of the empty parking space, in each running condition, the vehicle may switch to a driving policy for function degradation that uses only the ultrasonic radar. The ambient environment is used to assist the ultrasonic radar in recognizing and modeling a nearby environment. Although recognition precision and modeling performance decrease, autonomous parking of the vehicle into a parking space can still be implemented in each running condition.

In some embodiments, when the fisheye camera fails, the vehicle may alternatively switch to a driving policy for function degradation that may use the ultrasonic radar and the lidar, and autonomous parking of the vehicle into a parking space can still be implemented in each running condition.

Optionally, if an ambient environment such as a vehicle, a railing, or a wall that can indicate a boundary of an empty parking space does not exist on both sides of the empty parking space, and/or when the ultrasonic radar and the fisheye camera simultaneously fail, the current autonomous driving function is exited in each running condition.

When one or more of a front-facing lidar and a lateral lidar fail, a processing policy in the process in which the vehicle autonomously parks into a parking space is shown in Table 25.

**Table 25**

| Failure of the front-facing lidar and the lateral lidar | Normal running | Degradation policy | Exit |
|---|---|---|---|
| Parallel parking | | Use the ultrasonic radar and the fisheye camera to perform sensing | |
| Reverse parking | | Use the ultrasonic radar and the fisheye camera to perform sensing | |
| Oblique parking | | Use the ultrasonic radar and the fisheye camera to perform sensing | |

The lidar, the ultrasonic radar, and the fisheye camera each can detect a nearby environment in the process in which the vehicle autonomously parks into a parking space. When one or more lidars fail, the ultrasonic radar and the fisheye camera may be used to implement a key sub-function of detecting a nearby environment. Although recognition precision and modeling performance decrease (a non-key sub-function of high precision cannot be implemented), autonomous parking of the vehicle into a parking space can still be implemented in each running condition.

In some embodiments, when the ultrasonic radar and the lidar simultaneously fail, the fisheye camera may also be used to implement the key sub-function of detecting a nearby environment. Although recognition precision and modeling performance decrease, autonomous parking of the vehicle into a parking space can still be implemented in each running condition.

When one or more of a front-facing millimeter-wave radar, an angular millimeter-wave radar, and a rear-facing millimeter-wave radar fail, a radical processing policy in the process in which the vehicle autonomously parks into a parking space is shown in Table 26.

**Table 26**

| Failure of the front-facing millimeter-wave radar, the angular millimeter-wave radar, and the rear-facing millimeter-wave radar | Normal running | Degradation policy | Exit |
|---|---|---|---|
| Parallel parking | √ | | |
| Reverse parking | √ | | |
| Oblique parking | √ | | |

The millimeter-wave radar can provide an auxiliary target recognition function. It may be considered that the failure of the millimeter-wave radar does not affect implementation of any running condition of the autonomous driving function in the APA or RPA mode. When one or more millimeter-wave radars fail, a nearby environment of the vehicle can still be sensed in the process in which the vehicle autonomously parks into a parking space. Therefore, in each running condition, when one or more millimeter-wave radars fail, the vehicle can still maintain the autonomous driving function in the APA or RPA mode.

When one or more of ultrasonic radars fail, a radical processing policy in the process in which the vehicle autonomously parks into a parking space is shown in Table 26.

**Table 27**

| Failure of the ultrasonic radar | Normal running | Degradation policy | Exit |
|---|---|---|---|
| Parallel parking | | Use the fisheye camera to | |
| | | perform sensing | |
| Reverse parking | | Use the fisheye camera to perform sensing | |
| Oblique parking | | Use the fisheye camera to perform sensing | |

The ultrasonic radar is mainly configured to accurately detect a distance of a nearby obstacle. When the ultrasonic radar fails, the fisheye camera may be used to detect a nearby environment such as an obstacle. Although detection precision decreases, autonomous parking of the vehicle into a parking space can still be implemented in each working condition. It may also be understood that, when the ultrasonic radar fails, in each running condition, a key sub-function of detecting a nearby obstacle may be implemented by using the fisheye camera, but high detection precision (a non-key sub-function) cannot be implemented.

In some embodiments, when the ultrasonic radar fails, the fisheye camera and the lidar may also be used to detect a nearby environment.

When the lidar, the fisheye camera, and the ultrasonic radar simultaneously fail, high-precision detection of a nearby obstacle cannot be implemented in each running condition. In this case, the current autonomous driving function is exited.

In an automatic cruising process, for example, in an autonomous driving process in the ICA or NCA mode, when a sensor in FIG. 2 fails, for a conservative processing policy, refer to descriptions in Table 28 to Table 30.

In a conservative policy, it may be considered that the autonomous driving function is more dependent on a sensor. When one or more sensors fail, it is more inclined to exit the autonomous driving function, that is, the control right of the vehicle is completely handed over to the driver.

When one or more of front-facing cameras fail, a conservative processing policy in the automatic cruising process is shown in Table 28.

**Table 28**

| Failure of the front-facing camera | | ICA | | | NCA | | |
|---|---|---|---|---|---|---|---|
| | | Normal running | Degradation policy | Exit | Normal running | Degradation policy | Exit |
| Vertical control | Cruising | | | √ | | | √ |
| | Vehicle following | | | √ | | | √ |
| | Starting/Stopping | | | √ | | | √ |
| Horizontal control | Lane keeping | | | √ | | | √ |
| | Lane changing | | | √ | | | √ |
| | Turning | N/A | | | | | √ |

In a conservative policy, it may be considered that in any running condition, a sub-function associated with each front-facing camera is a key sub-function, and key sub-functions associated with various front-facing cameras are different from each other. When one of front-facing cameras fails, there is no other front-facing camera group that is not failed and that can be associated with a sub-function of the failed front-facing camera (it may also be understood that forward information required for safe driving of the vehicle cannot be obtained in this case), and a key sub-function associated with the failed front-facing camera cannot be implemented. Therefore, in each running condition, a corresponding driving policy is exiting the autonomous driving function in the ICA or NCA mode.

A driving policy used when two or more front-facing cameras fail is the same as the driving policy used when one of front-facing cameras fails.

When a front-facing millimeter-wave radar fails, a conservative processing policy in the automatic cruising process is shown in Table 29.

**Table 29**

| Failure of the front-facing millimeter-wave radar | | ICA | | | NCA | | |
|---|---|---|---|---|---|---|---|
| | | Normal running | Degradation policy | Exit | Normal running | Degradation policy | Exit |
| Vertical | Cruising | | | √ | | | √ |
| control | Vehicle following | | | √ | | | √ |
| | Starting/Stopping | | | √ | | | √ |
| Horizontal control | Lane keeping | | | √ | | | √ |
| | Lane changing | | | √ | | | √ |
| | Turning | N/A | | | | | √ |

In a conservative policy, it may be considered that, in each running condition of the ICA or NCA mode, the front-facing millimeter-wave radar is mainly configured to recognize a distant target in front and detect a speed of a vehicle in front. When the millimeter-wave radar fails, a key sub-function associated with the millimeter-wave radar cannot be implemented, and a driving policy corresponding to each running condition is exiting the current autonomous driving function.

In the automatic cruising process, for example, in the autonomous driving function in the ICA or NCA mode, when one or more of a left camera, a right camera, a rear-facing camera, a fisheye camera, a front-facing lidar, a lateral lidar, an angular millimeter-wave radar, a rear-facing millimeter-wave radar, and an ultrasonic radar fail, a driving policy of conservative processing is the same as a driving policy of radical processing, and details are not described herein.

In the process in which the vehicle searches for and travels to a parking space, for example, in the autonomous driving function in the AVP mode, when one or more of a front-facing camera, a left camera, a right camera, a rear-facing camera, a fisheye camera, a lidar, a millimeter-wave radar, and an ultrasonic radar fail, a conservative processing policy is the same as a radical processing policy, and details are not described herein.

In the process in which the vehicle autonomously parks into a parking space, for example, in the autonomous driving function in the APA or RPA mode, when a sensor in FIG. 2 fails, for a conservative processing policy, refer to Table 30 and some of the foregoing tables. Generally, in the process in which the vehicle autonomously parks into a parking space, a driving speed of the vehicle is relatively low.

In a conservative policy, parking space searching, positioning, and modeling may rely on an ordinary camera and the lidar, and obstacle recognition in a parking process may rely on the fisheye camera and the ultrasonic radar. The ordinary camera, the lidar, the fisheye camera, and the ultrasonic radar are all key sensors of the system.

When one or more of a front-facing camera, a left camera, a right camera, a rear-facing camera, a front-facing lidar, a lateral lidar, and a fisheye camera fail, a conservative processing policy in the process in which the vehicle autonomously parks into a parking space is shown in Table 30.

**Table 30**

| Failure of the front-facing camera, the left camera, the right camera, the rear-facing camera, the front-facing lidar, the lateral lidar, and the fisheye camera | Normal running | Degradation policy | Exit |
|---|---|---|---|
| Parallel parking | | | √ |
| Reverse parking | | | √ |
| Oblique parking | | | √ |

When one or more of the front-facing camera, the left camera, the right camera, the rear-facing camera, and the lidar fail, in any running condition, one or more of key sub-functions such as parking space searching, accurate positioning, and high-precision environment modeling cannot be implemented in the process in which the vehicle autonomously parks into a parking space. Therefore, when one or more of the front-facing camera, the left camera, the right camera, the rear-facing camera, and the lidar fail, a key sub-function associated with the one or more of the front-facing camera, the left camera, the right camera, the rear-facing camera, and the lidar is lost, each running condition cannot be implemented, and the vehicle may exit the autonomous driving function in the APA or RPA mode.

When the fisheye camera fails, in any working condition, it may be considered that a key sub-function of accurately sensing a nearby obstacle cannot be implemented in the process in which the vehicle autonomously parks into a parking space. Therefore, when the fisheye camera fails, a driving policy corresponding to each running condition is exiting the autonomous driving function in the APA or RPA mode.

When a millimeter-wave radar and an ultrasonic radar fail, in the process in which the vehicle autonomously parks into a parking space, a driving policy of conservative processing is the same as a driving policy of radical processing, and details are not described herein.

In an autonomous driving process, the current autonomous driving function is exited due to a sensor failure, and a specific policy is shown in Table 31.

**Table 31**

| Specific scenario | Exit policy |
|---|---|
| Vehicle cruising | Decelerate, to slowly stop the vehicle or until the driver takes over the vehicle |
| Approaching an intersection | Decelerate, to gradually stop the vehicle before the intersection, or until the driver takes over the vehicle |
| Ramp driving | Decelerate, to stop the vehicle before ramp merging, or until the driver takes over the vehicle |
| Curve driving | Maintain a turning state and decelerate, to slowly stop the vehicle or until the driver takes over the vehicle |
| Vehicle following, and a vehicle in front normally travels | Slowly decelerate, to stop the vehicle or until the driver takes over the vehicle |
| Vehicle following, and a vehicle in front decelerates | Brake the vehicle with force not less than deceleration of the vehicle in front, until the vehicle stops, or until the driver takes over the vehicle |
| Starting to follow a vehicle | Stop the vehicle and stop starting |
| Parking | Stop the vehicle and stop parking |

S630: Transmit the corresponding driving policy to the driver by using an HMI.

It should be understood that, in the autonomous driving process, the driving policy corresponding to the failure of the one or more sensors may be transmitted to the driver in different forms by using the HMI, so that the driver is notified of a sensor failure status and a related operation. For details, refer to the description in FIG. 5. Details are not described herein.

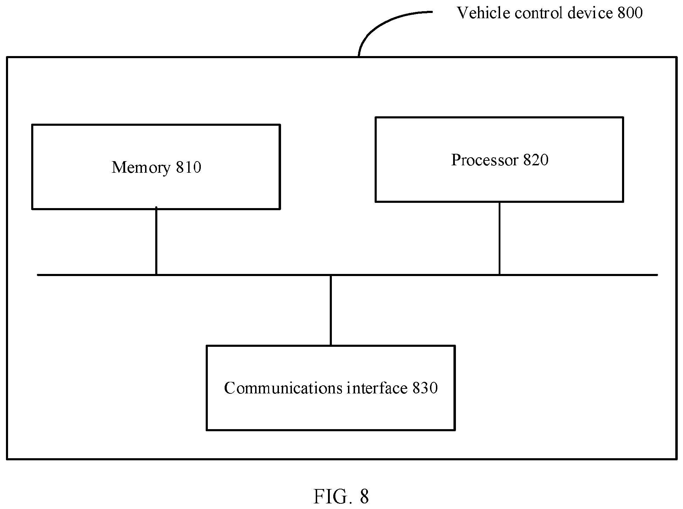

With reference to FIG. 1 to FIG. 6, the foregoing describes the vehicle control method provided in embodiments of the invention. The following describes apparatus embodiments in embodiments of the invention with reference to FIG. 7 and FIG. 8. It should be understood that, the descriptions of the method embodiments correspond to descriptions of the apparatus embodiments. Therefore, for a part that is not described in detail, refer to the foregoing descriptions.

FIG. 7 is a schematic block diagram of a vehicle control apparatus according to an embodiment of the invention. The apparatus 700 includes an obtaining unit 710 and a processing unit 720. The obtaining unit 710 may implement a corresponding communication function, and the processing unit 720 is configured to process data. The obtaining unit 710 may also be referred to as a communications interface or a communications unit. The apparatus 700 in FIG. 7 may execute the processes in the foregoing method embodiments. To avoid repetition, details are not described.

Optionally, the apparatus 700 may further include a storage unit 730. The storage unit 730 may be configured to store instructions and/or data. The processing unit 720 may read the instructions and/or the data in the storage unit, so that the apparatus 700 implements the foregoing method embodiments.

The apparatus 700 may be configured to perform an action performed by the second node in the foregoing method embodiments. Specifically, the obtaining unit 710 is configured to perform an obtaining-related operation on a second node side in the foregoing method embodiments, and the processing unit 720 is configured to perform a processing-related operation on the second node side in the foregoing method embodiments.

The apparatus 700 may include corresponding units configured to perform the processes of the method in FIG. 4. In addition, the units in the apparatus 700 and the foregoing other operations and/or functions are respectively used to implement corresponding procedures of the method embodiment in FIG. 4.

When the apparatus 700 is configured to perform the method 400 in FIG. 4, the obtaining unit 710 may be configured to perform step 410 in the method 400, and the processing unit 720 may be configured to perform step 420 in the method 400.

Specifically, the obtaining unit 710 is configured to obtain sensor status information and autonomous driving function information. The processing unit 720 is configured to determine a driving policy corresponding to a failure of one or more failed sensors in a first running condition.

In a possible implementation, the processing unit 720 is specifically configured to determine that a driving policy corresponding to a failure of a first type of sensor in the first running condition is maintaining a current autonomous driving function, where the one or more sensors include the first type of sensor, and the failure of the first type of sensor does not affect implementation of the first running condition.

In a possible implementation, the processing unit 720 is specifically configured to determine that a driving policy corresponding to a failure of a second type of sensor in the first running condition is disabling a non-key sub-function in the first running condition, where the one or more sensors include the second type of sensor, and the failure of the second type of sensor affects implementation of the non-key sub-function in the first running condition.

In a possible implementation, the processing unit 720 is specifically configured to determine that a driving policy corresponding to a failure of a third type of sensor in the first running condition is exiting the autonomous driving function, where the one or more sensors include the third type of sensor, and the failure of the third type of sensor affects implementation of a key sub-function in the first running condition.

In a possible implementation, the first type of sensor includes a first sensor unit, the first sensor unit is associated with a first sub-function, there is another sensor unit that is not failed and that is associated with the first sub-function, and the first sub-function is any one of the one or more sub-functions.

In a possible implementation, the first type of sensor further includes a second sensor unit, the second sensor unit is associated with a second auxiliary sub-function, and the second auxiliary sub-function is any one of the one or more auxiliary sub-functions.

In a possible implementation, the second type of sensor includes a third sensor unit, the third sensor unit is associated with a third non-key sub-function, there is no other failed sensor unit associated with the third non-key sub-function, and the third non-key sub-function is any one of the one or more non-key sub-functions.

In a possible implementation, the second type of sensor includes a fourth sensor unit, the fourth sensor unit is associated with a fourth key sub-function and a fourth non-key sub-function, there is an ambient environment that compensates for the fourth key sub-function and another sensor unit that is not failed and that senses the ambient environment, the ambient environment includes a vehicle, a railing, and the like, the fourth key sub-function is any one of the one or more key sub-functions, and the fourth non-key sub-function is any one of the one or more non-key sub-functions.

In a possible implementation, the third type of sensor includes a fifth sensor unit, the fifth sensor unit is associated with a fifth key sub-function, and there is no other sensor unit that is not failed and that is associated with the fifth key sub-function, or there is no at least one of the following: an ambient environment that compensates for the fifth key sub-function, and another sensor unit that is not failed and that senses the ambient environment; and the fifth key sub-function is any one of the one or more key sub-functions in the first running condition, and the fifth key sub-function is any one of the one or more key sub-functions.

In a possible implementation, the third type of sensor further includes a sixth sensor unit, the sixth sensor unit is associated with a sixth key sub-function, the sixth key sub-function cannot be compensated for by using an ambient environment, and the sixth key sub-function is any one of the one or more key sub-functions.

It should be understood that a specific process in which the units perform the foregoing corresponding steps is described in detail in the foregoing method embodiments, and for brevity, details are not described herein.

The processing unit 720 in FIG. 7 may be implemented by at least one processor or processor-related circuit, the obtaining unit 710 may be implemented by a transceiver or a transceiver-related circuit, and the storage unit 730 may be implemented by at least one memory.

FIG. 8 is a schematic block diagram of a vehicle control device according to an embodiment of the invention. The vehicle control device 800 shown in FIG. 8 may include a memory 810, a processor 820, and a communications interface 830. The memory 810, the processor 820, and the communications interface 830 are connected by using an internal connection path. The memory 810 is configured to store instructions. The processor 820 is configured to execute the instructions stored in the memory 820, to control the input/output interface 830 to receive/send at least some parameters of a second channel model. Optionally, the memory 810 may be coupled to the processor 820 through an interface, or may be integrated with the processor 820.

It should be noted that the communications interface 830 implements communication between the communications device 800 and another device or a communications network by using, for example but not limited to, a transceiver apparatus such as a transceiver. The communications interface 830 may further include an input/output interface (input/output interface).

In an implementation process, the steps in the foregoing methods may be implemented by using an integrated logic circuit of hardware in the processor 820 or software-form instructions. The methods disclosed with reference to embodiments of the invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 810, and the processor 820 reads information in the memory 810 and completes the steps in the foregoing methods in combination with hardware of the processor. To avoid repetition, details are not described herein.

It should be understood that the processor in this embodiment of the invention may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It should also be understood that, in this embodiment of the invention, the memory may include a read-only memory and a random access memory, and provide instructions and data for the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the invention. The execution sequences of the processes should be determined based on functions and internal logic of the processes, and should not be construed as any limitation on the implementation processes of embodiments of the invention.

An embodiment of the invention further provides a computing device, including at least one processor and a memory. The at least one processor is coupled to the memory, and is configured to read and execute instructions in the memory to perform any method in FIG. 4 to FIG. 6.

An embodiment of the invention further provides a computer-readable medium. The computer-readable medium stores program code, and when the computer program code is run on a computer, the computer is enabled to perform any method in FIG. 4 to FIG. 6.

An embodiment of the invention further provides a chip, including at least one processor and a memory. The at least one processor is coupled to the memory, and is configured to read and execute instructions in the memory to perform any method in FIG. 4 to FIG. 6.

An embodiment of the invention further provides a self-driving vehicle, including at least one processor and a memory. The at least one processor is coupled to the memory, and is configured to read and execute instructions in the memory to perform any method in FIG. 4 to FIG. 6.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the invention.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in the invention, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the invention may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of the invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the invention, but are not intended to limit the protection scope of the invention. Any variation or replacement readily figured out by a person skilled in the art within the technical scope disclosed in the invention shall fall within the protection scope of the invention. Therefore, the protection scope of the invention shall be subject to the protection scope of the claims.

## Claims

1. A vehicle control method, comprising:
obtaining (S410) sensor status information and autonomous driving function information, wherein the sensor status information comprises information indicating that one or more sensors are in a failed state, the autonomous driving function information is used to indicate a currently running autonomous driving function, the autonomous driving function comprises a plurality of running conditions, and the autonomous driving function comprises an automated valet parking, AVP, function, an auto parking assist, APA, function, or a remote parking assist, RPA, function, wherein:
the AVP function is configured to control a vehicle to cruise through and sense an ambient environment to determine whether there is an empty parking space,
the APA function is configured to determine, after it is determined that there is an empty parking space, a location relationship between the empty parking space and the vehicle, and control the vehicle to park into the empty parking space, and
the RPA function is configured to receive a parking instruction from a terminal device, determine, after it is determined that there is an empty parking space, a location relationship between the empty parking space and the vehicle, and control the vehicle to park into the empty parking space; and
based on impact of a failure of the one or more sensors on a first running condition, determining (S420) a driving policy corresponding to the failure of the one or more sensors in the first running condition, wherein the first running condition is any one of the plurality of running conditions,
wherein the driving policy is a driving policy for multi-level function degradation, and comprises: maintaining the autonomous driving function, disabling a part of the autonomous driving function, and exiting the autonomous driving function,
wherein implementation of the first running condition is related to one or more sub-functions, and the one or more sub-functions comprise at least one of the following: one or more key sub-functions, one or more non-key sub-functions, and one or more auxiliary sub-functions; and a loss of the key sub-function causes inability to implement the first running condition, a loss of the non-key sub-function does not affect implementation of a sub-function other than the non-key sub-function in the first running condition, and a loss of the auxiliary sub-function does not affect the implementation of the first running condition,
wherein the determining step comprises determining that a driving policy corresponding to a failure of a third type of sensor in the first running condition is exiting the autonomous driving function, wherein the one or more sensors comprise the third type of sensor, and the failure of the third type of sensor affects implementation of a key sub-function in the first running condition,
wherein
the AVP function is exited when the third type of sensor comprises at least one of:
two or more front-facing cameras in an event where there is no other front-facing camera group that has not failed and that is configurable to perform the sub-functions of the failed two or more front-facing cameras,
a lateral camera,
a front-facing LiDAR,
a lateral LiDAR, and
a fisheye camera; and
the APA or RPA function is exited when the third type of sensor comprises the fisheye camera, the front-facing LiDAR and/or the lateral LiDAR, and an ultrasonic radar.

2. The vehicle control method according to claim 1, wherein the determining a driving policy corresponding to the failure of the one or more sensors in the first running condition comprises:
determining that a driving policy corresponding to a failure of a first type of sensor in the first running condition is maintaining the autonomous driving function, wherein the one or more sensors comprise the first type of sensor, and the failure of the first type of sensor does not affect the implementation of the first running condition.

3. The vehicle control method according to any one of claims 1 to 2, wherein the determining a driving policy corresponding to the failure of the one or more sensors in the first running condition comprises:
determining that a driving policy corresponding to a failure of a second type of sensor in the first running condition is disabling a part of the autonomous driving function, wherein the one or more sensors comprise the second type of sensor, and the failure of the second type of sensor affects implementation of a non-key sub-function in the first running condition.

4. The vehicle control method according to claim 2, wherein the first type of sensor comprises a first sensor unit, the first sensor unit is associated with a first sub-function, there is another sensor unit that is not failed and that is associated with the first sub-function, and the first sub-function is any one of the one or more sub-functions.

5. The vehicle control method according to claim 2, wherein the first type of sensor further comprises a second sensor unit, the second sensor unit is associated with a second auxiliary sub-function, and the second auxiliary sub-function is any one of the one or more auxiliary sub-functions.

6. The vehicle control method according to claim 3, wherein the second type of sensor comprises a third sensor unit, the third sensor unit is associated with a third non-key sub-function, there is no other failed sensor unit associated with the third non-key sub-function, and the third non-key sub-function is any one of the one or more non-key sub-functions.

7. A computing device (800), comprising at least one processor (820) and a memory (810), wherein the at least one processor is coupled to the memory, and is configured to read and execute instructions in the memory to perform the method according to any one of claims 1 to 6.

8. A computer-readable medium, wherein the computer-readable medium stores program code, and when the computer program code is run on a computer, the computer is enabled to perform the method according to any one of claims 1 to 6.

9. A self-driving vehicle (100), comprising a plurality of front-facing cameras, a lateral camera, a LiDAR, a fisheye camera, an ultrasonic radar, and the computing device of claim 7.

## Patentansprüche

1. Fahrzeugsteuerungsverfahren , umfassend:
Erhalten (S410) von Sensorstatusinformationen und Informationen bezüglich einer autonomen Fahrfunktion, wobei die Sensorstatusinformationen Informationen umfassen, die angeben, dass sich ein oder mehrere Sensoren in einem Ausfallzustand befinden, die Informationen bezüglich der autonomen Fahrfunktion verwendet werden, um eine aktuell laufende autonome Fahrfunktion anzugeben, die autonome Fahrfunktion eine Mehrzahl von Betriebszuständen umfasst und die autonome Fahrfunktion eine automatische Parkservice-Funktion, AVP-Funktion, eine automatische Einparkhilfefunktion, APA-Funktion, oder eine ferngesteuerte Einparkhilfefunktion, RPA-Funktion, umfasst, wobei:
die AVP-Funktion dazu ausgelegt ist, ein Fahrzeug so zu steuern, dass es durch eine umliegende Umgebung fährt und diese erfasst, um zu bestimmen, ob ein freier Parkplatz vorhanden ist,
die APA-Funktion dazu ausgelegt ist, nach dem Bestimmen, dass ein freier Parkplatz vorhanden ist, eine Lagebeziehung zwischen dem freien Parkplatz und dem Fahrzeug zu bestimmen, und das Fahrzeug so zu steuern, dass es in den freien Parkplatz einparkt, und
die RPA-Funktion dazu ausgelegt ist, eine Parkanweisung von einer Endgerätevorrichtung zu empfangen, nach dem Bestimmen, dass ein freier Parkplatz vorhanden ist, eine Lagebeziehung zwischen dem freien Parkplatz und dem Fahrzeug zu bestimmen und das Fahrzeug so zu steuern, dass es in den freien Parkplatz einparkt; und
basierend auf einer Auswirkung eines Ausfalls des einen oder der mehreren Sensoren auf einen ersten Betriebszustand Bestimmen (S420) einer Fahrrichtlinie, die dem Ausfall des einen oder der mehreren Sensoren im ersten Betriebszustand entspricht, wobei der erste Betriebszustand einer der Mehrzahl von Betriebszuständen ist,
wobei die Fahrrichtlinie eine Fahrrichtlinie für mehrstufige Funktionsherabsetzung ist und Folgendes umfasst: Aufrechterhalten der autonomen Fahrfunktion, Deaktivieren eines Teils der autonomen Fahrfunktion und Beenden der autonomen Fahrfunktion, wobei die Implementierung des ersten Betriebszustands mit einer oder mehreren Teilfunktionen zusammenhängt und die eine oder mehreren Teilfunktionen mindestens eine von Folgenden umfassen: eine oder mehrere Schlüssel-Teilfunktionen, eine oder mehrere Nicht-Schlüssel-Teilfunktionen und eine oder mehrere Hilfs-Teilfunktionen; und ein Verlust der Schlüssel-Teilfunktion die Unfähigkeit zum Implementieren des ersten Betriebszustands verursacht, ein Verlust der Nicht-Schlüssel-Teilfunktion die Implementierung einer anderen Teilfunktion als der Nicht-Schlüssel-Teilfunktion im ersten Betriebszustand nicht beeinträchtigt und ein Verlust der Hilfs-Teilfunktion die Implementierung des ersten Betriebszustands nicht beeinträchtigt,
wobei der Bestimmungsschritt Bestimmen umfasst, dass eine Fahrrichtlinie, die einem Ausfall eines dritten Typs von Sensor im ersten Betriebszustand entspricht, Beenden der autonomen Fahrfunktion ist, wobei der eine oder die mehreren Sensoren den dritten Typ von Sensor umfassen und der Ausfall des dritten Typs von Sensor die Implementierung einer Schlüssel-Teilfunktion im ersten Betriebszustand beeinträchtigt,
wobei
die AVP-Funktion beendet wird, wenn der dritte Typ von Sensor mindestens eines von Folgendem umfasst:
zwei oder mehr nach vorne gerichtete Kameras, falls keine andere Gruppe nach vorne gerichteter Kameras vorhanden ist, die nicht ausgefallen ist und die konfiguriert werden kann, um die Teilfunktionen der ausgefallenen zwei oder mehr nach vorne gerichteten Kameras auszuführen,
eine Seitenkamera,
ein nach vorne gerichtetes LiDAR,
ein Seiten-LiDAR und
eine Fischaugenkamera; und
die APA- oder die RPA-Funktion beendet wird, wenn der dritte Typ von Sensor die Fischaugenkamera, das nach vorne gerichtete LiDAR und/oder das Seiten-LiDAR und ein Ultraschallradar umfasst.

2. Fahrzeugsteuerungsverfahren nach Anspruch 1, wobei das Bestimmen einer Fahrrichtlinie, die dem Ausfall des einen oder der mehreren Sensoren im ersten Betriebszustand entspricht, Folgendes umfasst:
Bestimmen, dass eine Fahrrichtlinie, die einem Ausfall eines ersten Typs von Sensor im ersten Betriebszustand entspricht, Aufrechterhalten der autonomen Fahrfunktion ist, wobei der eine oder die mehreren Sensoren den ersten Typ von Sensor umfassen und der Ausfall des ersten Typs von Sensor die Implementierung des ersten Betriebszustands nicht beeinträchtigt.

3. Fahrzeugsteuerungsverfahren nach einem der Ansprüche 1 bis 2, wobei das Bestimmen einer Fahrrichtlinie, die dem Ausfall des einen oder der mehreren Sensoren im ersten Betriebszustand entspricht, Folgendes umfasst:
Bestimmen, dass eine Fahrrichtlinie, die einem Ausfall eines zweiten Typs von Sensor im ersten Betriebszustand entspricht, Deaktivieren eines Teils der autonomen Fahrfunktion ist, wobei der eine oder die mehreren Sensoren den zweiten Typ von Sensor umfassen und der Ausfall des zweiten Typs von Sensor die Implementierung einer Nicht-Schlüssel-Teilfunktion im ersten Betriebszustand beeinträchtigt,

4. Fahrzeugsteuerungsverfahren nach Anspruch 2, wobei der erste Typ von Sensor eine erste Sensoreinheit umfasst, die erste Sensoreinheit mit einer ersten Teilfunktion assoziiert ist, eine weitere Sensoreinheit vorhanden ist, die nicht ausgefallen ist und die mit der ersten Teilfunktion assoziiert ist, und die erste Teilfunktion eine der einen oder der mehreren Teilfunktionen ist.

5. Fahrzeugsteuerungsverfahren nach Anspruch 2, wobei der erste Typ von Sensor ferner eine zweite Sensoreinheit umfasst, die zweite Sensoreinheit mit einer zweiten Hilfs-Teilfunktion assoziiert ist und die zweite Hilfs-Teilfunktion eine der einen oder der mehreren Hilfs-Teilfunktionen ist.

6. Fahrzeugsteuerungsverfahren nach Anspruch 3, wobei der zweite Typ von Sensor eine dritte Sensoreinheit umfasst, die dritte Sensoreinheit mit einer dritten Nicht-Schlüssel-Teilfunktion assoziiert ist, keine weitere ausgefallene Sensoreinheit vorhanden ist, die mit der dritten Nicht-Schlüssel-Teilfunktion assoziiert ist, und die dritte Nicht-Schlüssel-Teilfunktion eine der einen oder der mehreren Nicht-Schlüssel-Teilfunktionen ist.

7. Computervorrichtung (800), umfassend mindestens einen Prozessor (820) und einen Speicher (810), wobei der mindestens eine Prozessor mit dem Speicher gekoppelt und dazu ausgelegt ist, Anweisungen in dem Speicher auszulesen und auszuführen, um das Verfahren nach einem der Ansprüche 1 bis 6 durchzuführen.

8. Computerlesbares Medium, wobei das computerlesbare Medium Programmcode speichert und der Computer bei Ausführung des Computerprogrammcodes auf einem Computer zum Durchführen des Verfahrens nach einem der Ansprüche 1 bis 6 befähigt wird.

9. Selbstfahrendes Fahrzeug (100), umfassend eine Mehrzahl von nach vorne gerichteten Kameras, eine Seitenkamera, ein LiDAR, eine Fischaugenkamera, ein Ultraschallradar und die Computervorrichtung nach Anspruch 7.

## Revendications

1. Procédé de commande de véhicule, comprenant :
l'obtention (S410) d'informations sur l'état de capteurs et d'informations sur une fonction de conduite autonome, les informations sur l'état de capteurs indiquant qu'un ou que plusieurs capteurs sont dans un état défectueux, les informations sur une fonction de conduite autonome étant utilisées pour indiquer une fonction de conduite autonome en cours de fonctionnement, la fonction de conduite autonome comprenant une pluralité de conditions de fonctionnement, et la fonction de conduite autonome comprenant une fonction de voiturier automatique, AVP, une fonction d'assistance de stationnement automatique, APA, ou une fonction d'assistance de stationnement à distance, RPA,
la fonction AVP étant configurée de façon à commander la navigation d'un véhicule et à détecter un environnement ambiant pour déterminer s'il y a un espace de stationnement libre ou pas,
la fonction APA étant configurée de façon à déterminer, après qu'il a été déterminé qu'il y a un espace de stationnement libre, une relation de position entre l'espace de stationnement libre et le véhicule, et à commander le stationnement du véhicule dans l'espace de stationnement libre, et
la fonction RPA étant configurée de façon à recevoir une instruction de stationnement d'un dispositif terminal, à déterminer, après qu'il a été déterminé qu'il y avait un espace de stationnement libre, une relation de position entre l'espace de stationnement libre et le véhicule, et à commander le stationnement du véhicule dans l'espace de stationnement libre ; et
en se basant sur l'impact d'une défaillance du ou des capteurs sur une première condition de fonctionnement, la détermination (S420) d'une politique de conduite correspondant à la défaillance du ou des capteurs dans la première condition de fonctionnement, la première condition de fonctionnement étant l'une quelconque de la pluralité de conditions de fonctionnement,
la politique de conduite étant une politique de conduite pour une dégradation fonctionnelle à niveaux multiples et comprenant : le maintien de la fonction de conduite autonome, la désactivation d'une partie de la fonction de conduite autonome,
et le déclenchement de la sortie de la fonction de conduite autonome,
la mise en œuvre de la première condition de fonctionnement étant liée à une ou plusieurs sous-fonctions, et la ou les sous-fonctions comprenant au moins une des sous-fonctions suivantes : une ou plusieurs sous-fonctions clés, une ou plusieurs sous-fonctions non clés, et une ou plusieurs sous-fonctions auxiliaires ; et une perte de la sous-fonction clé entraînant l'incapacité de mettre en œuvre la première condition de fonctionnement, une perte de la sous-fonction non clé n'affectant pas la mise en œuvre d'une sous-fonction autre que la sous-fonction non clé dans la première condition de fonctionnement, et une perte de la sous-fonction auxiliaire n'affectant pas la mise en œuvre de la première condition de fonctionnement,
l'étape de détermination comprenant la détermination qu'une politique de conduite correspondant à une défaillance d'un troisième type de capteur dans la première condition de fonctionnement est la sortie de la fonction de conduite autonome, le ou
les capteurs comprenant le troisième type de capteur, et la défaillance du troisième type de capteur affectant la mise en œuvre d'une sous-fonction clé dans la première condition de fonctionnement,
la sortie de la fonction AVP étant déclenchée lorsque le troisième type de capteur comprend au moins des éléments suivants :
deux caméras frontales ou plus dans un cas où il n'y a pas d'autre groupe de caméras frontales qui n'est pas défectueux et qui est configurable pour exécuter les sous-fonctions des deux caméras frontales ou plus défectueuses,
une caméra latérale,
un LiDAR frontal,
un LiDAR latéral, et
une caméra œil de poisson ; et
la sortie de la fonction APA ou RPA étant déclenchée lorsque le troisième type de capteur comprend la caméra œil de poisson, le LIDAR frontal et/ou le LIDAR latéral, et un radar ultrasonique.

2. Procédé de commande de véhicule selon la revendication 1, dans lequel la détermination d'une politique de conduite correspondant à la défaillance du ou des capteurs dans la première condition de fonctionnement comprend :
la détermination qu'une politique de conduite correspondant à une défaillance d'un premier type de capteur dans la première condition de fonctionnement maintient la fonction de conduite autonome, le ou les capteurs comprenant le premier type de capteur, et la défaillance du premier type de capteur n'affectant pas la mise en œuvre de la première condition de fonctionnement.

3. Procédé de commande de véhicule selon l'une quelconque des revendications 1 et 2, dans lequel la détermination d'une politique de conduite correspondant à la défaillance du ou des capteurs dans la première condition de fonctionnement comprend :
la détermination qu'une politique de conduite correspondant à une défaillance d'un deuxième type de capteur dans la première condition de fonctionnement désactive une partie de la fonction de conduite autonome, le ou les capteurs comprenant le deuxième type de capteur, et la défaillance du deuxième type de capteur affectant la mise en œuvre d'une sous-fonction non clé dans la première condition de fonctionnement.

4. Procédé de commande de véhicule selon la revendication 2, dans lequel le premier type de capteur comprend une première unité de capteur, la première unité de capteur est associée à une première sous-fonction, il y a une autre unité de capteur qui n'est pas défectueuse et qui est associée à la première sous-fonction, et la première sous-fonction est l'une quelconque de la ou des sous-fonctions.

5. Procédé de commande de véhicule selon la revendication 2, dans lequel le premier type de capteur comprend en outre une deuxième unité de capteur, cette deuxième unité de capteur étant associée à une deuxième sous-fonction auxiliaire, et cette deuxième sous-fonction auxiliaire étant l'une quelconque de la ou des sous-fonctions auxiliaires.

6. Procédé de commande de véhicule selon la revendication 3, dans lequel le deuxième type de capteur comprend une troisième unité de capteur, la troisième unité de capteur est associée à une troisième sous-fonction non clé, il n'y a pas d'autre unité de capteur défectueuse associée à la troisième sous-fonction non clé, et la troisième sous-fonction non clé est l'une quelconque de la ou des sous-fonctions non clés.

7. Dispositif informatique (800), comprenant au moins un processeur (820) et une mémoire (810), l'au moins un processeur étant couplé à la mémoire, et étant configuré de façon à lire et à exécuter des instructions dans la mémoire pour réaliser le procédé selon l'une quelconque des revendications 1 à 6.

8. Support lisible par ordinateur, le support lisible par ordinateur stockant un code de programme, et, lorsque le code de programme est exécuté sur un ordinateur, l'ordinateur étant activé pour réaliser le procédé selon l'une quelconque des revendications 1 à 6.

9. Véhicule autonome (100), comprenant une pluralité de caméras frontales, une caméra latérale, un LiDAR, une caméra œil de poisson, un radar ultrasonique, et le dispositif informatique selon la revendication 7.
